(19) Europäisches Patentamt
European Patent Office
Office européen des brevets

(11) **EP 2 312 856 A1**

(12) **EUROPEAN PATENT APPLICATION**
published in accordance with Art. 153(4) EPC

(43) Date of publication:
**20.04.2011 Bulletin 2011/16**

(21) Application number: **09794384.9**

(22) Date of filing: **03.07.2009**

(51) Int Cl.:
***H04N 7/32*** *(2006.01)*

(86) International application number:
**PCT/JP2009/062212**

(87) International publication number:
**WO 2010/004939 (14.01.2010 Gazette 2010/02)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **10.07.2008 JP 2008180284**

(71) Applicant: **Mitsubishi Electric Corporation**
**Tokyo 100-8310 (JP)**

(72) Inventors:
• **SEKIGUCHI, Shunichi**
**Tokyo 100-8310 (JP)**
• **YAMAGISHI, Shuichi**
**Tokyo 100-8310 (JP)**

• **ITANI, Yusuke**
**Tokyo 100-8310 (JP)**
• **YAMADA, Yoshihisa**
**Tokyo 100-8310 (JP)**
• **KATO, Yoshiaki**
**Tokyo 100-8310 (JP)**
• **ASAI, Kohtaro**
**Tokyo 100-8310 (JP)**
• **MURAKAMI, Tokumichi**
**Tokyo 100-8310 (JP)**

(74) Representative: **Pfenning, Meinig & Partner GbR**
**Patent- und Rechtsanwälte**
**Theresienhöhe 13**
**80339 München (DE)**

(54) **IMAGE ENCODING DEVICE, IMAGE DECODING DEVICE, IMAGE ENCODING METHOD, AND IMAGE DECODING METHOD**

(57) Provided are a device and a method for efficiently compressing information by performing improved removal of signal correlations according to statistical and local properties of a video signal in a 4:4:4 format which is to be encoded. The device includes: a prediction unit for determining, for each color component, a motion prediction mode exhibiting a highest efficiency among a plurality of motion prediction modes, and detecting a motion vector corresponding to the determined motion prediction mode, to thereby perform output; and a variable-length encoding unit for determining, when performing arithmetic coding on the motion prediction mode of the each color component, an occurrence probability of a value of the motion prediction mode of the each color component based on a motion prediction mode selected in a spatially-adjacent unit region and a motion prediction mode selected in a temporally-adjacent unit region, to thereby perform the arithmetic coding.

FIG. 1

**Description**

Technical Field

The present invention relates to an image encoding device, an image decoding device, an image encoding method, and an image decoding method which are used for a technology of image compression encoding, a technology of transmitting compressed image data, and the like.

Background Art

Conventionally, international standard video encoding methods such as MPEG and ITU-T H.26x have mainly used a standardized input signal format referred to as a 4:2:0 format for a signal to be subjected to the compression processing. The 4:2:0 format is a format obtained by transforming a color motion image signal such as an RGB signal into a luminance component (Y) and two color difference components (Cb, Cr), and reducing the number of samples of the color difference components to a half of the number of samples of the luminance component both in the horizontal and vertical directions. The color difference components are low in visibility compared to the luminance component, and hence the international standard video encoding methods such as the MPEG-4 AVC (ISO/IEC 14496-10)/ITU-T H.264 standard (hereinbelow, referred to as AVC) (Non Patent Literature 1) are based on the premise that, by applying down-sampling to the color difference components before the encoding, the amount of original information to be encoded is reduced. On the other hand, for high quality contents such as digital cinema, in order to precisely reproduce, upon viewing, the color representation defined upon the production of the contents, a direct encoding method in a 4:4:4 format which, for encoding the color difference components, employs the same number of samples as that of the luminance component without the down-sampling is essential. As a method suitable for this purpose, there is an extended method compliant with the 4:4:4 format (high 4:4:4 intra or high 4:4:4 predictive profile) described in Non Patent Literature 1, or a method described in "IMAGE INFORMATION ENCODING DEVICE AND METHOD, AND IMAGE INFORMATION DECODING DEVICE AND METHOD", WO 2005/009050 A1 (Patent Literature 1). FIG. 19 illustrates a difference between the 4:2:0 format and the 4:4:4 format. In this figure, the 4:2:0 format includes the luminance (Y) signal and the color difference (Cb, Cr) signals, and one sample of the color difference signal corresponds to 2x2 samples of the luminance signal while the 4:4:4 format does not specifically limit the color space for expressing the colors to Y, Cb, and Cr, and the sample ratio of the respective color component signals is 1:1. Hereinbelow, the terms "4:2:0", "4:4:4", and the like are collectively referred to as "chroma format".

Citation List

Patent Literature

[PTL 1] WO 2005/009050 A1 "IMAGE INFORMATION ENCODING DEVICE AND METHOD, AND IMAGE INFORMATION DECODING DEVICE AND METHOD"

Non Patent Literature

[NPL 1] MPEG-4 AVC (ISO/IEC 14496-10)/ITU-T H.264 standard
[NPL 2] S.Sekiguchi, et.al., "Low-overhead INTER Prediction Modes", VCEG-N45, Sep.2001.
[NPL 3] S. Kondo and H.Sasai, "A Motion Compensation Technique using Sliced Blocks and its Application to Hybrid Video Coding", VCIP 2005, July 2005.
[NPL 4] D. Marpe, et.al., "Video Compression Using Context-Based Adaptive Arithmetic Coding", International Conference on Image Processing 2001

Summary of Invention

Technical Problem

For example, in the encoding in the 4:4:4 format described in Non Patent Literature 1, as illustrated in FIG. 20, first, input video signals 1001 (in the 4:4:4 format) to be encoded are, in advance, directly or after transformation into signals in an appropriate color space (such as Y, Cb, Cr), divided in units of a macroblock (rectangular block of 16 pixels by 16 lines) in a block division unit 1002, and are input, as video signals to be encoded 1003, to a prediction unit 1004. In Non Patent Literature 1, the macroblock may be formed of a unit of combined three color components, or may be formed as a rectangular block of a single color component with the respective color components considered as independent pictures, and any one of the structures of the macroblock may be selected for use in a sequence level. The prediction unit 1004 predicts image signals of the respective color components in the macroblock within a frame and between frames, thereby obtaining prediction error signals 1005. Specifically, in a case of performing the prediction between frames, motion vectors are estimated in units of the macroblock itself or a sub-block obtained by further dividing the macroblock into smaller blocks to generate motion-compensation predicted images based on the motion vectors, and differences are obtained between the video signals to be encoded 1003 and the motion-compensation predicted images to obtain the prediction error signals 1005. A compression unit 1006 applies transform processing such as a discrete cosine transform (DCT) to the prediction error signals 1005 to remove signal correlations, and quantizes resulting signals into compressed data 1007. The compressed data 1007 is encoded through entropy encoding by a variable-length encoding unit 1008, is output as a bit stream 1009, and is also sent to a local decoding unit 1010, to thereby obtain decoded prediction error signals 1011. These signals are respectively added to predicted signals 1012 used for generating the prediction error signals 1005, to thereby obtain decoded signals 1013. The decoded signals 1013 are stored in a memory 1014 in order to generate the predicted signals 1012 for the subsequent video signals to be encoded 1003. There may be provided a configuration in which, before the decoded signals are written to the memory 1014, a deblocking filter is applied to the decoded signals, thereby carrying out processing of removing a block distortion, which is not illustrated. Note that, parameters for predicted signal generation 1015 determined by the prediction unit 1004 in order to obtain the predicted signals 1012 are sent to the variable-length encoding unit 1008, and are output as the bit stream 1009. On this occasion, the parameters for predicted signal generation 1015 include, for example, an intra prediction mode indicating how the spatial prediction is carried out in a frame, and motion vectors indicating the quantity of motion between frames. If the macroblock is formed of a unit of combined three color components, the parameters for predicted signal generation 1015 are detected as parameters commonly applied to the three color components, and if the macroblock is formed as a rectangular block of a single color component with the respective color components considered as independent pictures, the parameters for predicted signal generation 1015 are detected as parameters independently applied to the respective color components.

A video signal in the 4:4:4 format contains the same number of samples for the respective color components, and thus, in comparison with a video signal in the conventional 4:2:0 format, has faithful color reproducibility. However, the video signal in the 4:4:4 format contains redundant information contents in terms of compression encoding. In order to increase the compression efficiency of the video signal in the 4:4:4 format, it is necessary to further reduce the redundancy contained in the signal compared to the fixed color space definition (Y, Cb, Cr) in the conventional 4:2:0 format. In the encoding in the 4:4:4 format described in Non Patent Literature 1, the video signals to be encoded 1003 are encoded with the respective color components considered as luminance signals independently of statistical and local properties of the signals, and signal processing that maximally considers the properties of the signals to be encoded is not carried out in any of the prediction unit 1004, the compression unit 1006, and the variable-length encoding unit 1008. In order to address the above-mentionedproblem, Patent Literature 1 discloses a technique of switching the size of the block for performing intra-frame/inter-frame prediction or of switching a transform/quantization method for the prediction error signal, which is performed by adapting a difference in chroma format or difference in color space definition. With this, it is possible to perform efficient encoding adaptive to the signal characteristic of each color component. However, even Patent Literature 1 has a drawback of not being able to sufficiently adapt to the resolution of the original image or the structure of a subject in an image.

It is therefore an object of the present invention to provide a method of efficiently compressing information by performing improved removal of signal correlations according to statistical and local properties of a video signal in a 4:4:4 format which is to be encoded, and, as described as the conventional technology, for encoding a motion image signal, such as a signal in a 4:4:4 format, which does not have a difference in sample ratio among color components, to provide an image encoding device, an image decoding device, an image encoding method, and an image decoding method, which are enhanced in optimality.

Solution to Problem

The present invention provides an image encoding device for dividing each frame of a digital video signal into predetermined coding blocks, and performing, in units thereof, compression encoding by using motion compensation prediction, the image encoding device including: coding block size determination means for determining a size of the coding block based on a predetermined method, and separately determining, with respect to a signal of each color component in the coding block, a shape of a motion prediction unit block serving as a unit for performing motion prediction; prediction means for: determining, for the motion prediction unit block of a first color component in the coding block, a first motion prediction mode exhibiting a highest efficiency among a plurality of motion prediction modes, and detecting a first motion vector corresponding to the determined first motion prediction mode; determining, for the motion prediction unit block of a second color component in the coding block, a second motion prediction mode based on the first motion prediction mode, the shape of the motion prediction unit block of the first color component, the shape of the motion prediction unit block of the second color component, and the first motion vector, and detecting a second motion vector corresponding to the determined second motion prediction mode; and determining, for the motion prediction unit block of a third color component in the coding block, a third motion prediction mode based on the first motion prediction mode, the shape of the motion prediction unit block of the first color component, the shape of the motion prediction unit block of the third color component, and the first motion vector, and detecting a third motion vector corresponding to the determined third motion prediction mode, to thereby perform output; and variable-length encoding means for: determining, when performing arithmetic coding on the first motion prediction mode, an occurrence probability of a value of the first motion prediction mode based on a motion prediction mode selected in a spatially-adjacent motion prediction unit block and a motion prediction mode selected in a temporally-adj acent motion prediction unit block, to thereby perform the arithmetic coding; and determining, when performing the arithmetic coding on the second motion prediction mode and the third motion prediction mode, the occurrence probability of a value of the second motion prediction mode and the occurrence probability of a value of the third motion prediction mode based on the motion prediction mode selected in the spatially-adjacent motion prediction unit block, the motion prediction mode selected in the temporally-adjacent motion prediction unit block, and the first motion prediction mode, to thereby perform the arithmetic coding.

Advantageous Effects of Invention

According to the image encoding device, the image decoding device, the image encoding method, and the image decoding method of the present invention, in the case of performing the encoding of the video signal in the 4:4: 4 format, it is possible to configure such an encoding device or a decoding device that flexibly adapts to a time-variable characteristic of each color component signal. Therefore, optimum encoding processing can be performed with respect to the video signal in the 4:4:4 format.

Brief Description of Drawings

[FIG. 1] An explanatory diagram illustrating a configuration of an encoding device according to a first embodiment.
[FIGS. 2A and 2B] An explanatory diagram illustrating examples of how motion prediction unit blocks are sectioned.
[FIG. 3] An explanatory diagram illustrating an example of division of the motion prediction unit blocks.
[FIG. 4] A flow chart illustrating a processing flow of a prediction unit 4.
[FIG. 5] An explanatory diagram illustrating a calculation method for cost J.
[FIG. 6] An explanatory diagram illustrating calculation examples of PMVs for mc_model to mc_mode4.
[FIG. 7] An explanatory diagram illustrating processing performed in a case where sizes of the motion prediction unit blocks are not changed between a color component $C_0$ and color components $C_1$ and $C_2$.
[FIG. 8] An explanatory diagram illustrating processing performed in a case where the sizes of the motion prediction unit blocks are changed between the color component $C_0$ and the color components $C_1$ and $C_2$.
[FIG. 9] An explanatory diagram illustrating an operation of selecting a context model based on temporal correlations.
[FIG. 10] An explanatory diagram illustrating an inner configuration of a variable-length encoding unit 8.
[FIG. 11] An explanatory diagram illustrating an operation flow of the variable-length encoding unit 8.
[FIG. 12] An explanatory diagram illustrating a concept of the context model (ctx).
[FIG. 13] An explanatory diagram illustrating an example of the context model regarding a motion vector.
[FIGS. 14A and 14B] An explanatory diagram illustrating differences in correlations among motion prediction modes.
[FIG. 15] An explanatory diagram illustrating a data array of a bit stream 9.
[FIG. 16] An explanatory diagram illustrating a configuration of an image decoding device according to the first embodiment.
[FIG.17] An explanatory diagram illustrating an inner configuration of a variable-length decoding unit 30 which is related to arithmetic decoding processing.
[FIG. 18] An explanatory diagram illustrating an operation flow related to the arithmetic decoding processing performed by the variable-length decoding unit 30.

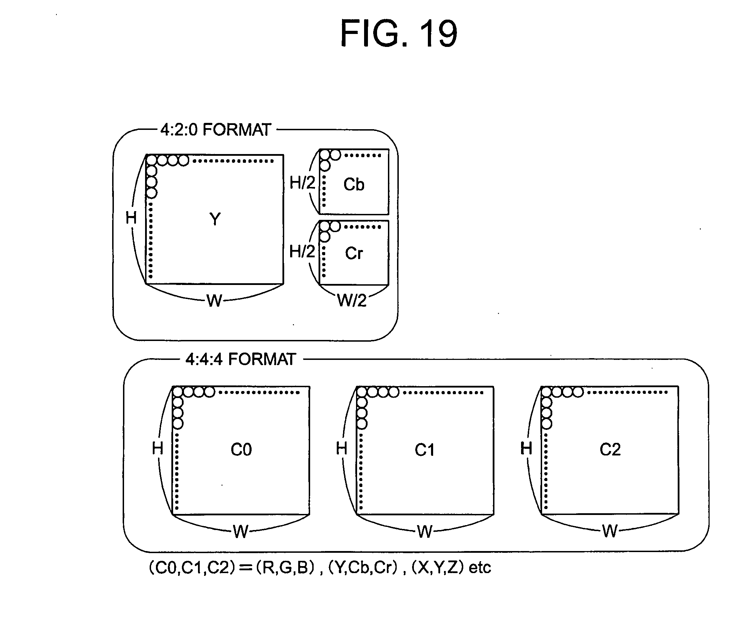

[FIG. 19] An explanatory diagram illustrating a difference between a 4:2:0 format and a 4:4:4 format.

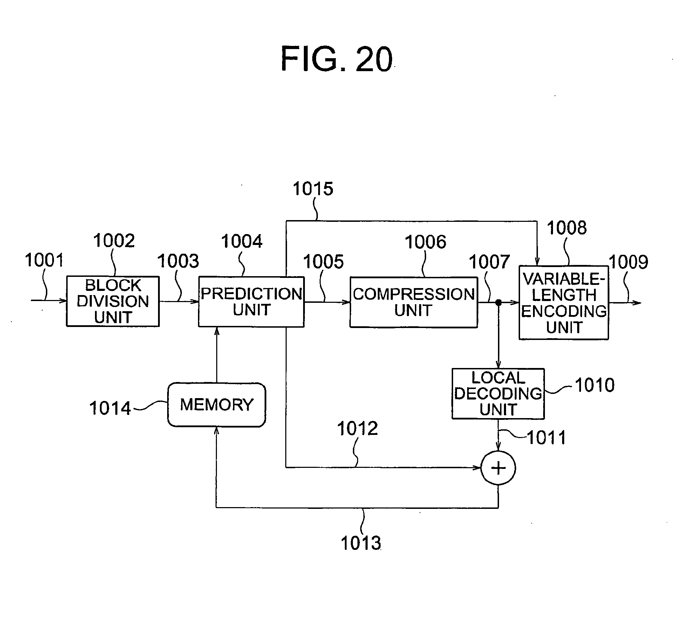

[FIG. 20] An explanatory diagram illustrating a configuration of a conventional encoding device for the 4:4:4 format.

Description of Embodiment

First Embodiment

In this embodiment, description is given of an image encoding device and an image decoding device for performing compression and expansion, respectively, of a digital video signal that is input in a 4:4:4 format, the image encoding device and the image decoding device being for performing motion compensation prediction processing by adapting to a state of a signal of each color component.

1. Operation of Image Encoding Device

An encoding device of a first embodiment of the present invention is configured to divide an input video frame in the 4:4:4 format into $M_{max} \times M_{max}$ pixel blocks (hereinbelow, referred to as "coding blocks"), perform motion prediction in units of the coding block, and perform compression encoding on a prediction error signal.

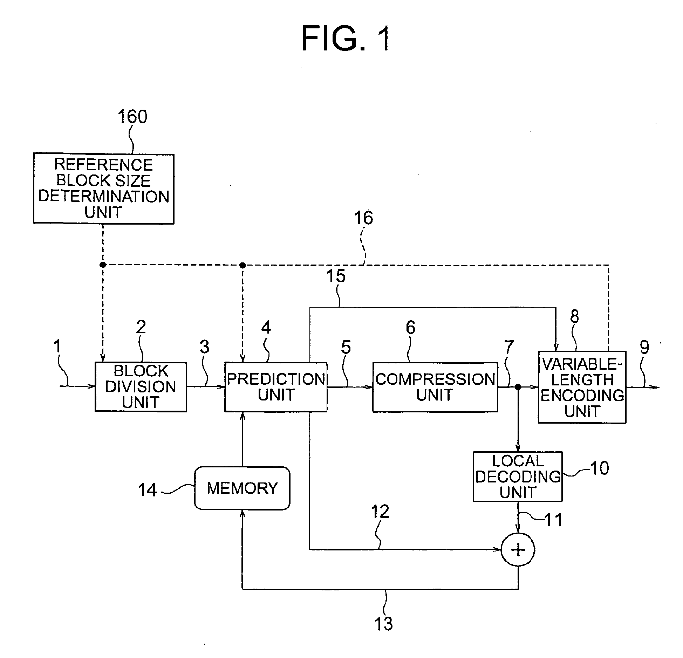

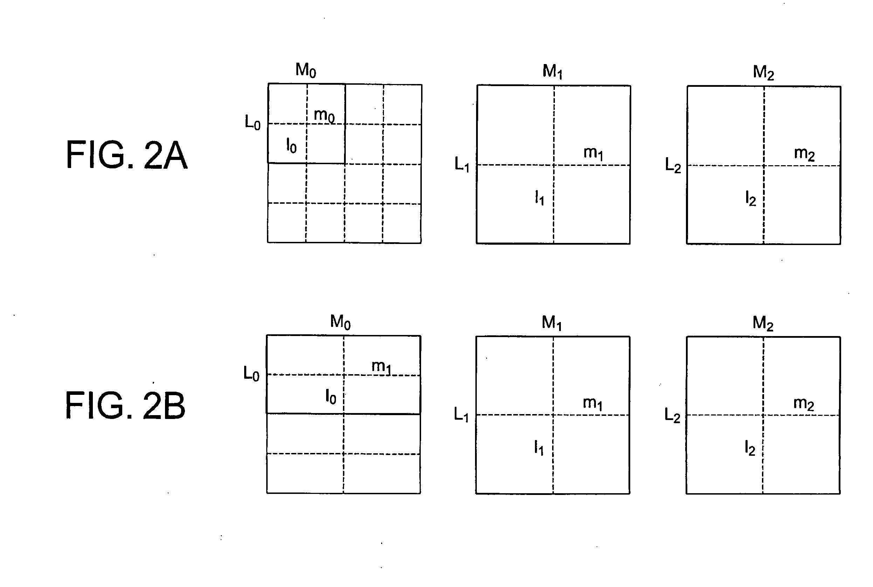

FIG. 1 illustrates a configuration of the encoding device of the first embodiment of the present invention. First, an input video signal 1 (in the 4:4:4 format) to be encoded is divided in units of the coding block (rectangular block of M pixels by M lines) by a block division unit 2, and then input, as a signal to be encoded 3, to a prediction unit 4. In FIG. 1, the coding block is, as illustrated in FIGS. 2A and 2B, formed of a unit obtained by combining blocks of three color components, each of which includes $M_{max} \times M_{max}$ pixels. $M_{max}$ is determined/encoded at an upper layer data level, such as a frame, a sequence, or a GOP, which is described later. Data in the coding block of each color component is further divided into "motion prediction unit blocks" each formed of $L_i \times M_i$ pixel blocks, and the motion prediction and the encoding are performed based on the motion prediction unit blocks. Referring to FIGS. 2A and 2B, FIG. 2A illustrates a pattern of the motion prediction unit block having $L_0=M_{max}/2$ and $M_0=M_{max}/2$, whereas FIG. 2B illustrates a pattern of the motion prediction unit block having $L_0=M_{max}/2$ and $M_0=M_{max}$. In both FIGS. 2A and 2B, $L_1=M_1=L_2=M_2=M_{max}$ is satisfied. The size ($L_i$ and $M_i$) of the motion prediction unit block for each color component may be selected on a color component basis, and may be changed in units of the sequence, the GOP, the frame, the coding block, etc. Note that, in the first embodiment of the present invention, the same coding block is used for the three color components, and in a case where the sizes of the coding blocks are changed, the coding blocks are changed to the same size for all of the three color components.

The prediction unit 4 performs motion compensation prediction on an image signal in the coding block of each color component, to thereby obtain a prediction error signal 5. The operation of the prediction unit 4 is a feature of the encoding device of the first embodiment of the present invention, and hence detailed description thereof is given later. A compression unit 6 applies transform processing such as a discrete cosine transform (DCT) to the prediction error signal 5 to remove signal correlations, and quantizes a resulting signal into compressed data 7. The compressed data 7 is encoded through entropy encoding by a variable-length encoding unit 8, is output as a bit stream 9, and is also sent to a local decoding unit 10, to thereby obtain a decoded prediction error signal 11. This signal is added to a predicted signal 12 used for generating the prediction error signal 5, to thereby obtain a decoded signal 13. The decoded signal 13 is stored in a memory 14 in order to generate the predicted signal 12 for a subsequent signal to be encoded 3. Note that, parameters for predicted signal generation 15 determined by the prediction unit 4 in order to obtain the predicted signal 12 are sent to the variable-length encoding unit 8, and are output as the bit stream 9. Detailed description of the contents of the parameters for predicted signal generation 15 is given below along with description of the prediction unit 4. Further, an encoding method for the parameters for predicted signal generation 15, which is performed in the variable-length encoding unit 8, is also one of the features of the first embodiment of the present invention, and hence detailed description thereof is given later.

In the standard video encoding methods of Non Patent Literature 1, Non Patent Literature 2, and the like, in a case where a macroblock is used as the coding block, a method in which a selection is made between intra-frame encoding and inter-frame predictive encoding in units of the macroblock is generally used. This is because there is a case where the use of correlations within a frame is more efficient in encoding when the motion prediction between frames is not sufficient. Hereinbelow, no explicit description of the intra-frame encoding or of selective use thereof is herein given in describing the gist of the invention, but, unless specifically indicated otherwise, the encoding device of the first embodiment of the present invention is configured such that the selective use of the intra-frame encoding is possible in units of the coding block. (In the encoding device of the first embodiment of the present invention, the macroblock may be defined as the coding block, but the term "coding block" is used hereinbelow for description of the motion prediction.)

Hereinbelow, description is given of detailed operation of the prediction unit 4, which is one of the features of the first embodiment of the present invention. The feature of the prediction unit 4 according to the first embodiment of the present invention has the following two points:

(1) coordinated adaptation between the size of the coding block/the motion prediction unit block and a division shape used for the motion prediction; and

(2) determination on a motion prediction mode and a motion vector according to properties of each color component.

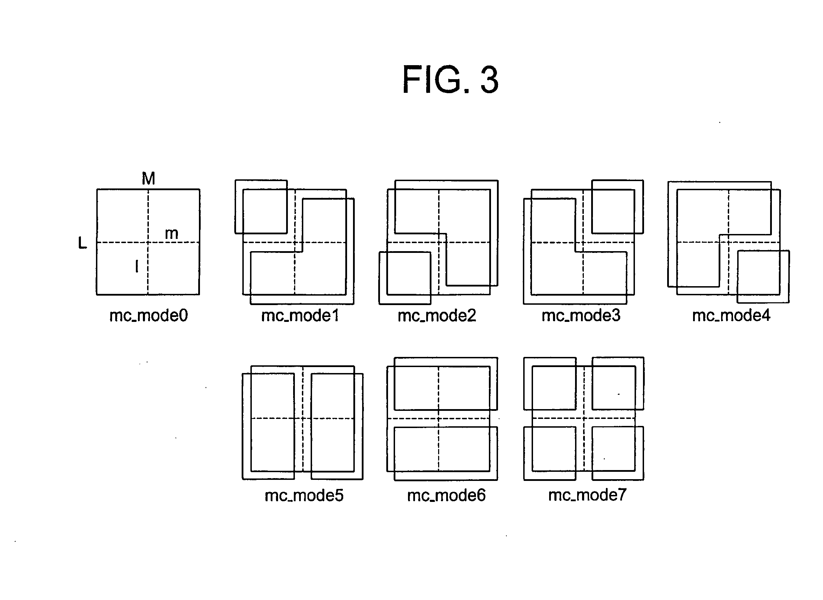

With regard to (1), the coding block is divided into the motion prediction unit blocks each having $L_i \times M_i$ pixels according to properties of a signal of each color component; the motion prediction unit block is further divided into a plurality of shapes formed of a combination of $l_i \times m_i$ pixels; a unique motion vector is assigned to each of the divided regions to perform prediction; a shape exhibiting the highest prediction efficiency is selected as the motion prediction mode; and, by using the motion vector obtained as a result thereof, the motion prediction is performed with respect to each of the divided regions, to thereby obtain the prediction error signal 5. The division shape in the motion prediction unit block is such a shape that is formed of a combination of "basic blocks" each having $l \times m$ pixels. In the encoding device of the first embodiment of the present invention, the following constraints are provided between M and m and between L and l: "m=M/2" and "l=L/2". FIG. 3 illustrates the division shapes of the basic blocks determined under such conditions. FIG. 3 illustrates how the motion prediction unit block is divided, and, in the encoding device of the first embodiment of the present invention, the patterns of the division shapes (division patterns) may be shared among the three color components, or may be determined separately therefor. Note that, such division patterns mc_mode 0 to mc_mode 7 are hereinbelow referred to as motion prediction modes.

In the standard video encoding methods of Non Patent Literature 1, Non Patent Literature 2, and the like, the shape of a region to be subjected to the motion prediction is limited to a rectangle, and thus, apart from the rectangular division, diagonal division as in FIG. 3 cannot be used. As described above, by increasing the variety of the shapes of the regions to be subjected to the motion prediction, the motion prediction can be performed with a smaller number of motion vectors, compared with the rectangular division, in a case where the coding block contains complicated motion, such as an outline portion of a moving object. Non Patent Literature 2 and Non Patent Literature 3 disclose techniques of increasing the variety of the division shapes of the regions to be subj ected to the motion prediction with respect to the conventional macroblock. Non Patent Literature 2 discloses a method for flexibly setting the division shape in the coding block, in which $M_{max}$ is fixed to 16, and m and 1 are each set to 4, specifying arbitrary values that satisfy $M_{max}$ mod m=0 to define the division. Further, Non Patent Literature 3 discloses a method of representing the division shape by the positions of intersection points between line segments dividing the macroblock and block boundaries thereof. However, those methods are both a method of increasing the division patterns in the coding block while M is fixed, and thus have the following problems.

Problem 1

There occurs an increase in amount of encoding for describing the division patterns of the coding block. If an arbitrary m satisfying $M_{max}$ mod m=0 is permitted, the division patterns in the coding block increase, which causes the need to encode information for specifying those patterns as overhead information. As the division patterns increase, the probability of occurrence of a given particular division pattern has a more dispersed distribution. As a result, the entropy encoding of the division patterns becomes less efficient, causing overhead in terms of the amount of encoding, and reaching the limit in capability from the perspective of the encoding as a whole.

Problem 2

An increase in division patterns leads to an increase in amount of computation necessary for selecting an optimum division at the time of the encoding. The motion prediction is high load processing that occupies most of the load of encoding processing, and hence, if an algorithm that allows the division patterns to increase without any limitation is used, the encoding device needs to be designed to examine/use only particular division patterns out of those division patterns. Therefore, there is a case where the encoding device cannot make full use of the capability inherent in the algorithm.

According to an approach of FIG. 3 employed by the encoding device of the first embodiment of the present invention, the above-mentioned problems are solved by the following three attempts. First, 1) the value of $M_{max}$ can be changed at a frame level based on encoding conditions, and the resolution and properties of the video signal. 2) The $M_{max} \times M_{max}$ pixel block can be divided into the basic blocks each having $L_i \times M_i$ pixels according to a characteristic of each color component $C_i$. 3) As conditions for the division into the basic blocks, the division shape is limited to such a shape that satisfies the constraints of "m=M/2" and "1=L/2". The value of $M_{max}$ representing the size of the coding block is not locally changed in the frame. The value of $M_{max}$ can be changed only at an upper data structure level, such as the frame level or a frame sequence (sequence, GOP). This configuration enables adaptation to differences in meaning among image signal patterns contained in the coding blocks. For example, signal patterns have different representation meanings in the same $M_{max} \times M_{max}$ pixel block between a low-resolution video (for example, VGA) and a high-resolution video (for example, HDTV). In a case of performing the prediction on the same subject, in the low-resolution video, a signal pattern closer to the structure of the subject is captured, whereas, in the high-resolution video, only a signal pattern representing a more local part of the subject is captured with the same block size. Thus, if the same size is used for the coding blocks regardless of the resolutions, as the resolution becomes higher, the signal pattern in the coding block has more elements of noise components, and the capability of the motion prediction as a pattern matching technology is prevented from being improved. The value of $M_{max}$ can be changed only at the upper data structure level, and hence the signal pattern contained in the coding block can be optimized in terms of the motion prediction according to various conditions including the resolution of the video, scene changes, activity changes of the whole screen, and the like, while suppressing the amount of encoding required for signaling of the value of $M_{max}$. In addition to this configuration, the division pattern in the motion prediction unit block can be changed on a color component basis as in FIGS. 2A and 2B, and hence a unit for processing the motion prediction can be optimized according to the signal characteristic of each color component. In addition, the division patterns are given a limited degree of flexibility in the motion prediction unit block as in FIG. 3, and hence a total efficiency of the motion prediction can be improved while suppressing the amount of encoding required for the division pattern representation in the motion prediction unit block. Further, if the processing of determining the value of $M_{max}$ at the frame level is performed efficiently, variations of the division patterns to be examined in the coding block can be made fewer afterward compared with the related art, which therefore reduces the load of the encoding processing. Examples of the method of determining the value of $M_{max}$ include, for example, the following methods.

The value of $M_{max}$ is determined based on the resolution of a video to be encoded. In the case where the same value is used for $M_{max}$, if the resolution is high, the image signal pattern in the coding block contains more elements of the noise components, and thus it becomes more difficult to capture the image signal pattern with the motion vector. In such a case, the value of $M_{max}$ is increased so as to be able to capture the image signal pattern.

· Assuming a difference value between frames as an activity, the motion prediction is performed with a smaller $M_{max}$ value in a case where the activity is large, whereas the motion prediction is performed with a larger $M_{max}$ value in a case where the activity is small. Further, the size control performed on this occasion is determined based on the frame rate of the video to be encoded. As the frame rate becomes higher, an inter-frame correlation becomes higher and a dynamic range of the motion vector itself becomes smaller, which accordingly makes the amount of encoding therefor smaller. Thus, such a method is conceivable that, even if the activity is small to a certain degree, the value of $M_{max}$ is set so as not to be too large, to thereby enable minute movements to be predicted.
· The above-mentioned methods are weighted and combined, to thereby make a determination.

After the value of $M_{max}$ is determined, $L_i$ and $M_i$ are determined for each color component. As a reference for this determination, in a case where, for example, the input video signal 1 is a signal defined by the YUV (or YCbCr) color space, U/V components, which are color signals, have narrower signal bands than a Y component being the luminance signal. Therefore, such an example is conceivable that, in view of the fact that the color signals have a smaller distribution in the block compared with the luminance, $L_i$ and $M_i$ of the U/V components are set to have larger values than the values of $L_i$ and $M_i$ of the luminance component (see FIGS. 2A and 2B).

The values of $M_{max}$, $L_i$, and $M_i$ obtained as a result of the above-mentioned control are notified, as a coding block size 16, from a coding block size determination unit 160 to the block division unit 2, the prediction unit 4, and the variable-length encoding unit 8. Note that, if $L_i$ and $M_i$ are set to such values that can be derived from $M_{max}$ through easy computation as in FIGS. 2A and 2B, it is only necessary to encode an identifier for the calculation formula instead of encoding $L_i$ and $M_i$ as independent values, which therefore enables the amount of encoding required for the coding block size 16 to be suppressed.

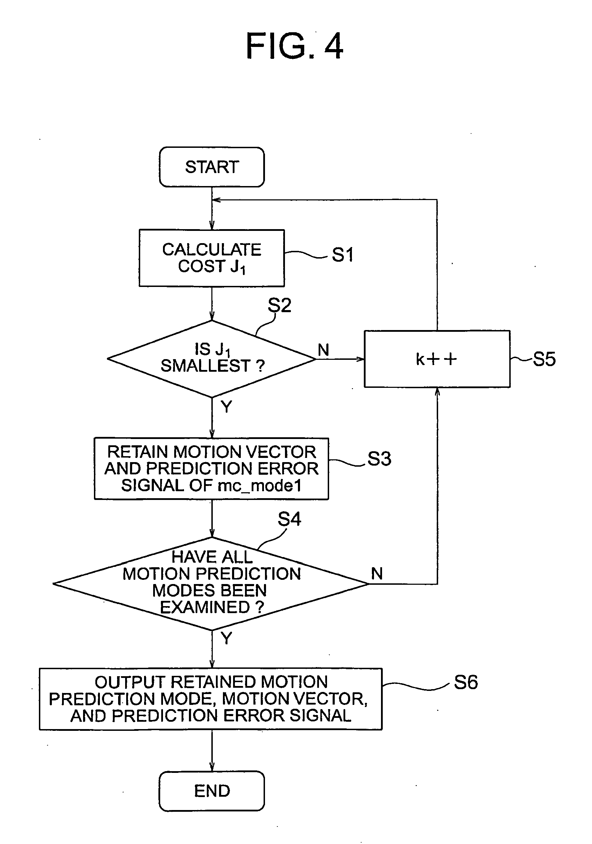

Based on the coding block size 16, the prediction unit 4 executes motion detection processing that uses the division patterns of FIGS. 2A and2B andFIG. 3. FIG. 4 illustrates a processing flow. The prediction unit 4 performs the motion prediction for the $C_i$ component of the frame in units of the motion prediction unit block having $L_i \times M_i$ pixels. Basically, in this process, with regard to each of the division patterns of from mc_mode0 to mc_mode7 of FIG. 3, an optimum motion vector is detected in a specified motion estimation range for each of the divided regions, and it is eventually determined which of the motion prediction modes of from mc_mode0 to mc_mode7 provides the highest prediction efficiency for the coding block.

With regard to the prediction efficiency, a cost J is defined as follows by a total amount of encoding R for the motion vectors in the coding block and a prediction error amount D obtained between the input video signal 1 and the predicted signal 12 generated from a reference image stored in the memory 14 by applying the motion vectors, and the motion prediction mode and the motion vector that minimize J are output.

$$J=D+\lambda R \qquad (\lambda:\ constant) \qquad (1)$$

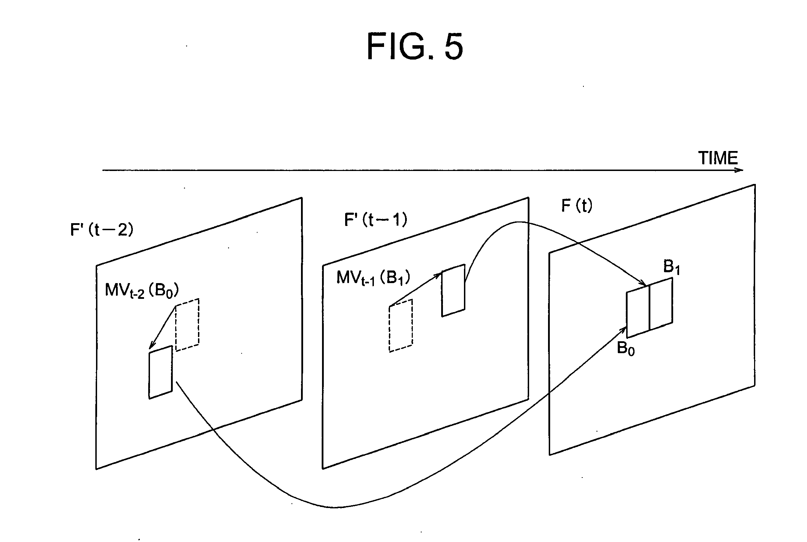

First, for each of the motion prediction modes, the cost J is calculated (Step S1). FIG. 5 illustrates a method of calculating J by taking, as an example, the case of mc_mode5. In this case, the motion prediction unit block for an object to be predicted in a frame F(t) is constituted by two divided regions $B_0$ and $B_1$. Further, it is assumed that, in the memory 14, two encoded/locally-decoded reference images F' (t-1) and F' (t-2) are stored, and that the motion prediction of the divided regions $B_0$ and $B_1$ can be performed using those two reference images. In the figure, with regard to the divided region $B_0$, the reference image F'(t-2) is used to detect a motion vector $MV_{t-2}(B_0)$, and with regard to the divided region $B_1$, the reference image F' (t-1) is used to detect a motion vector $MV_{t-1}(B_1)$. Assuming that B represents the divided region, $S_n(x)$ represents a pixel value at a position x=(i,j) in the screen of an n-th frame, and v represents the motion vector, the prediction error amount D of the divided region B can be calculated using a sum of absolute difference (SAD) as follows.

[Equation 1]

$$D = \sum_{\mathbf{x} \in B} \left| S_n(\mathbf{x}) - S_{n-1}(\mathbf{x} + \mathbf{v}) \right| \qquad (2)$$

Consequently, based on $D_0$ and $D_1$ thus obtained corresponding to the $B_0$ and $B_1$, D is obtained as $D=D_0+D_1$. On the other hand, R is obtained as $R=R_0+R_1$ based on $R_0$ and $R_1$. $R_0$ and $R_1$ are obtained by converting, to the amounts of encoding, the following motion vector prediction difference values $MVD(B_0)$ and $MVD(B_1)$ obtained using motion vector prediction values $PMV(B_0)$ and $PMV(B_1)$, respectively.

$$MVD(B_0)=MV_{t-2}(B_0)-PMV(B_0)$$

$$MVD(B_1)=MV_{t-1}(B_1)-PMV(B_1) \qquad (3)$$

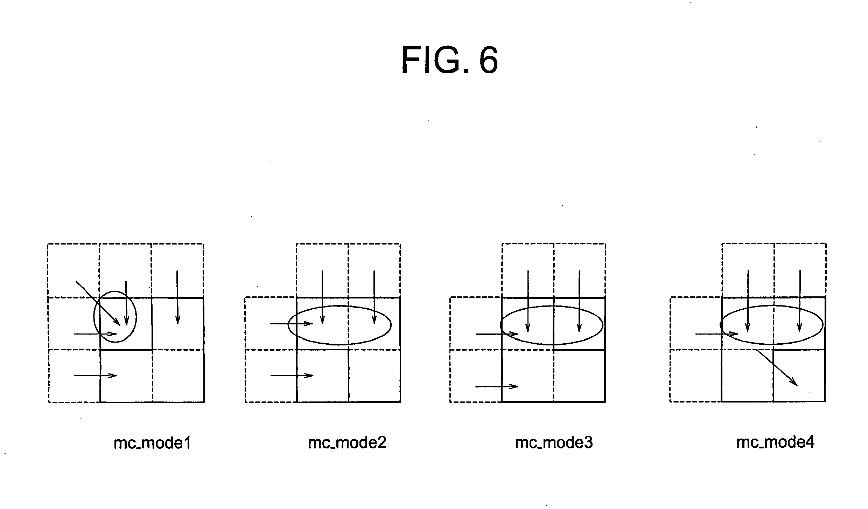

In this manner, the cost J is determined. The cost J is calculated for all of the examination-target motion vectors in the estimation range, and, for the division pattern of mc_mode5, a solution that provides the smallest cost J is determined. Note that, FIG. 6 illustrates calculation examples of calculation of PMVs for mc_mode1 to mc_mode4 (mc_mode0, mc_mode5, mc_mode6, and mc_mode7 are disclosed in Non Patent Literature 1). In the figure, arrows represent motion vectors in vicinities used for deriving a prediction vector, and, with regard to three motion vectors enclosed by a circle, the prediction vector of the divided region indicated by the circle is determined by a median of the three motion vectors enclosed by the circle.

An examination is performed to determine whether or not a cost $J_k$ in $mc\_mode_k$ thus determined is smaller than costs in $mc\_mode_k$ examined thus far (Step S2). In a case where the cost $J_k$ in $mc\_mode_k$ is smaller, that $mc\_mode_k$ is retained as an optimum motion prediction mode at that time, and also, the motion vector and the prediction error signal at that time are retained as well (Step S3). In a case where all the motion prediction modes have been examined (Steps S4 and S5), the motion prediction mode, the motion vector, and the prediction error signal which are retained thus far are output as final solutions (Step S6). Otherwise, a next motion prediction mode is examined.

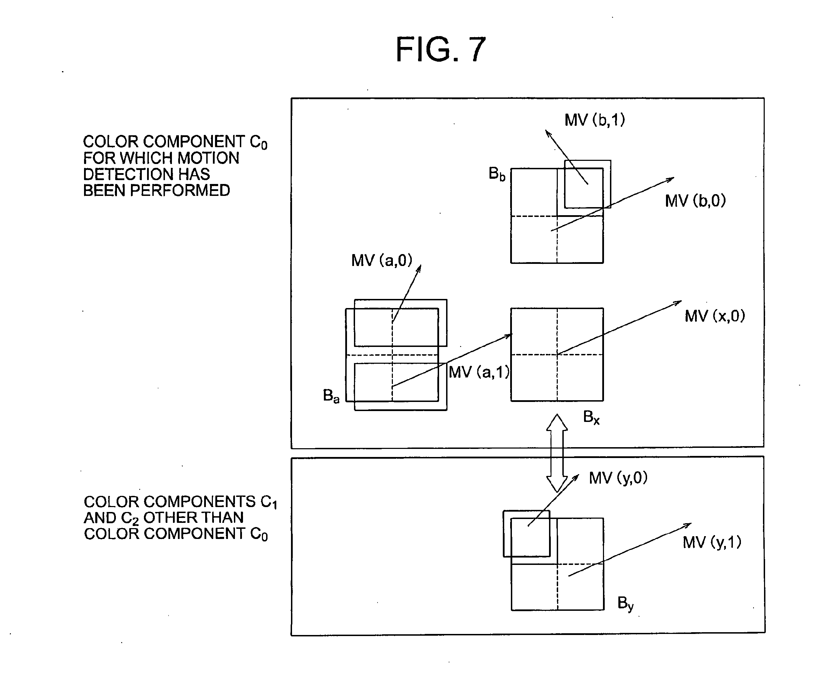

The encoding device according to the first embodiment of the present invention is configured to switch in units of the coding block between the following processings: processing in which the above-mentioned processing steps are performed for each of the three color components by the prediction unit 4, to thereby obtain an optimum motion prediction mode, an optimum motion vector, and an optimum prediction error signal for each color component; and processing in which, after an optimum motion prediction mode, an optimum motion vector, and an optimum prediction error signal are determined for a given particular component, the motion prediction modes, the motion vectors, and the prediction error signals for the rest of the color components are determined based on those pieces of information. For the former processing, the above-mentioned processing flow of FIG. 4 may be executed for each of the three color components. The latter processing is described with reference to FIG. 7.

In FIG. 7, the "color component $C_0$ for which motion detection has been performed" indicates a color component for which the motion detection has been performed based on the above-mentioned processing flow of FIG. 4. By represents the motion prediction unit blocks of the other color components $C_1$ and $C_2$ located at the same coordinate position in the image space as a motion prediction unit block $B_x$ of the component $C_0$ in the coding block. For the color component $C_0$, it is assumed that an optimum motion prediction mode and an optimum motion vector are already calculated for a left motion prediction unit block $B_a$ and an upper motion prediction unit block $B_b$ each. For the left motion prediction unit block $B_a$, the motion prediction mode is determined as mc_mode6, and the motion vectors are determined as MV (a, 0) and MV (a, 1), whereas, for the upper motion prediction unit block $B_b$, the motion prediction mode is determined as mc_mode3, and the motion vectors are determined as MV(b,0) and MV(b,1). Further, it is also assumed that, for the motion prediction unit block $B_x$ at the same position, the motion prediction mode is determined as mc_mode0, and the motion vector is determined as MV (x, 0). Under those conditions, for the motion prediction unit block By, according to the motion prediction mode to be applied, a motion vector candidate is uniquely generated based on the motion vectors of $B_a$, $B_b$, and $B_x$. In a case where the motion prediction mode applied to the motion prediction unit block By is mc_mode1, the motion vector candidate is determined by the following equations.

$$\mathrm{MV}(y,0) = w_a * \mathrm{MV}(a,0) + w_b * \mathrm{MV}(b,0) + w_c * \mathrm{MV}(x,0)$$

$$\mathrm{MV}(y,1) = w_d * \mathrm{MV}(a,1) + w_e * \mathrm{MV}(b,0) + w_f * \mathrm{MV}(x,0) \qquad (4)$$

$w_a$, $w_b$, $w_c$, $w_d$, $w_e$, and $w_f$ represent weights for the respective vectors, and are determined in advance according to the type of the motion prediction mode to be applied to By. How the motion vectors of $B_a$, $B_b$, and $B_x$ are applied is also determined for each of the motion prediction modes fixedly. By using the motion vector candidates uniquely determined in this manner, the costs J corresponding to the respective motion prediction modes are determined, and the motion prediction mode and the motion vector candidate which make the cost smallest are adopted as the motion prediction mode and the motion vector which are to be applied to the coding block By. By configuring, in this manner, the motion detection processing performed by the prediction unit 4, the motion prediction modes can be flexibly selected for the color components $C_1$ and $C_2$, and also, the corresponding motion vectors can always be generated based on information on the color component $C_0$. Therefore, it is possible to suppress the amount of encoding for the parameters for predicted signal generation 15 which are to be encoded. Further, because there exist given correlations in image structure among the three color components, the motion prediction mode selected in the motion prediction unit block $B_x$ of the component $C_0$ conceivably has given correlations with the optimum motion prediction modes in the motion prediction unit blocks By of the color components $C_1$ and $C_2$. In view of this, according to the motion prediction mode selected in the motion prediction unit block $B_x$ of the component $C_0$, the types of the motion prediction modes which may be used in the corresponding motion prediction unit blocks of the color components $C_1$ and $C_2$ may be narrowed down and classified for use. With this configuration, the number of motion prediction modes selectable for the color components $C_1$ and $C_2$ can be reduced with the prediction efficiency maintained, and hence it is possible to increase the encoding efficiency for the motion prediction mode while suppressing the amount of computation required for the selection of the motion prediction mode.

Further, because there is no guarantee that the motion vector candidate determined through the above-mentioned method is the optimum result obtained as a result of the estimation, a cost comparison with, for example, the following case may be performed in FIG. 7, to thereby select a case that provides the smaller cost.

$$\mathrm{MV}(y,0) = \mathrm{MV}(x,0), \text{ the motion prediction mode is mc\_mode0}$$

$$(5)$$

In the case of Expression (5), the motion prediction modes and the motion vectors of the color components $C_1$ and $C_2$ are respectively the same as those of the color component $C_0$, and hence the encoding can be performed only with one-bit information indicating whether or not the conditions of Expression (5) are to be selected. Further, this bit can be encoded with an amount of encoding equal to or smaller than one bit by appropriately designing the adaptive binary arithmetic coding. Further, with regard to MV(y,0), MV(y,1), and the like which have been obtained through the above-mentionedmethod, re-estimation of the motion vector may be performed in a minute estimation range, and a minute vector only for additional estimation may be encoded.

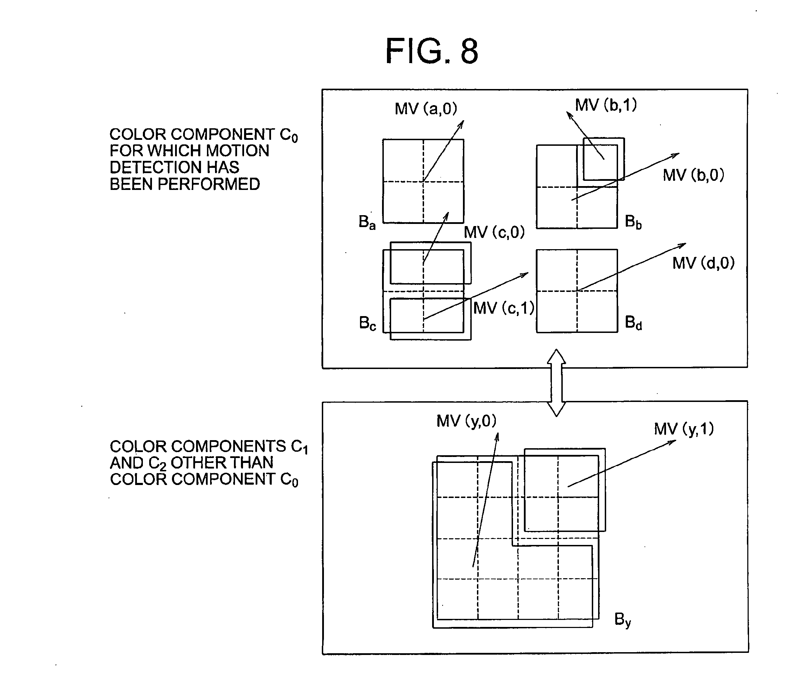

FIG. 8 illustrates a case where the sizes of the motion prediction unit blocks are different between the color component $C_0$ and the color components $C_1$ and $C_2$ (FIG. 2A, for example). In this case, the motion vector candidates of the color components $C_1$ and $C_2$ with resepct to the motion prediction mode mc_mode3 may be determined as follows.

$$MV(y,0)=w_a*MV(a,0)+w_b*MV(c,0)+w_c*MV(c,1)+w_d*MV(d,0)$$

$$MV(y,1)=w_e*MV(b,0)+w_f*MV(b,1) \qquad (6)$$

Note that, $w_a$, $w_b$, $w_c$, $w_d$, $w_e$, and $w_f$ may be changed in weighting value according to such a condition as an encoding bit rate. If the encoding bit rate is low, R being a factor of the amount of encoding constitutes a large part of the cost J, and hence the motion vector field is generally controlled such that there is relatively small variation. Therefore, the correlations in the motion prediction mode and the motion vector field conceivably change between the color component $C_0$ and the color components $C_1$ and $C_2$. In consideration of this fact, if such a configuration that enables the weighting to be changed is provided, it is possible to perform more efficient motion prediction with respect to the color components $C_1$ and $C_2$. Specifically, it is conceivable that the values are encoded in header information of upper layers, such as the picture level, the GOP level, and the sequence level, and are multiplexed into the bit stream, or that rules that change in coordination with quantization parameters are shared between the encoding device and the decoding device, for example.

With the above-mentioned configuration, the motion prediction modes of the color components $C_1$ and $C_2$ can be easily determined based on the motion prediction mode and the motion vector of the color component $C_0$, and also, the motion vectors of the color components $C_1$ and $C_2$ can be uniquely derived from information on the motion vector of the color component $C_0$. Therefore, it is possible to flexibly follow the signal properties of the color components $C_1$ and $C_2$ and perform efficient encoding while suppressing the amount of encoding for the parameters to be encoded.

Through the above-mentioned processing performed by the prediction unit 4, the prediction error signal 5 and the parameters for predicted signal generation 15 are output and then subjected to the entropy encoding by the variable-length encoding unit 8. In the encoding device of the first embodiment of the present invention, the encoding of the prediction error signal 5 is performed through the same processing as is performed in an encoding device according to the related art. Hereinbelow, description is given of an entropy encoding method for the parameters for predicted signal generation 15, which is one of the features of the encoding device of the first embodiment of the present invention.

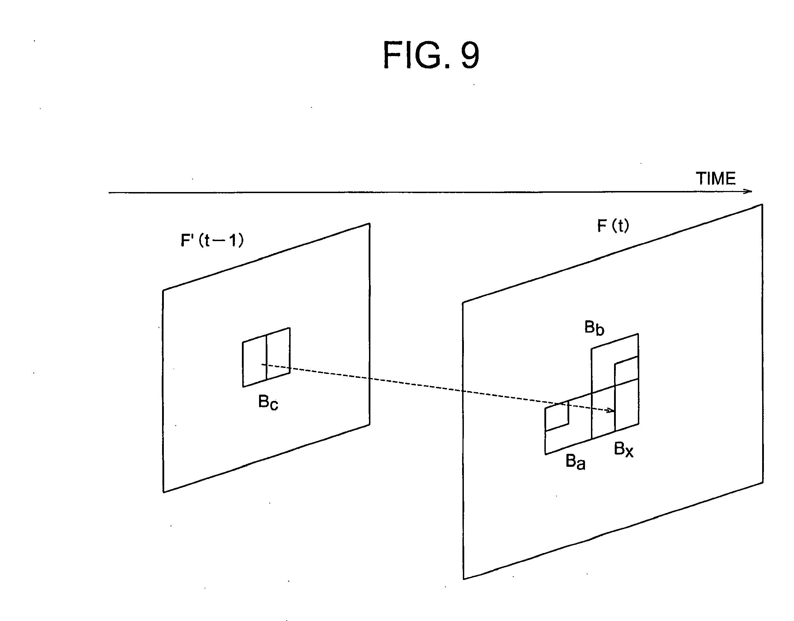

In the encoding of the parameters for predicted signal generation 15 described below, two types of parameters, that is, the motion prediction mode and the motion vector, are to be described. In the encoding device of the first embodiment of the present invention, as illustrated in FIG. 9, in encoding a motion prediction mode $m(B_x)$ of the basic block $B_x$ to be predicted/encoded, the entropy encoding is performed by selectively referring to the state of a prediction mode $m(B_a)$ of the left basic block $B_a$ and a prediction mode $m(B_b)$ of the upper basic block $B_b$ in the same frame, or a motion prediction mode $m(B_c)$ of a basic block $B_c$ in an adjacent preceding frame, which is located at the same position as the basic block $B_x$.

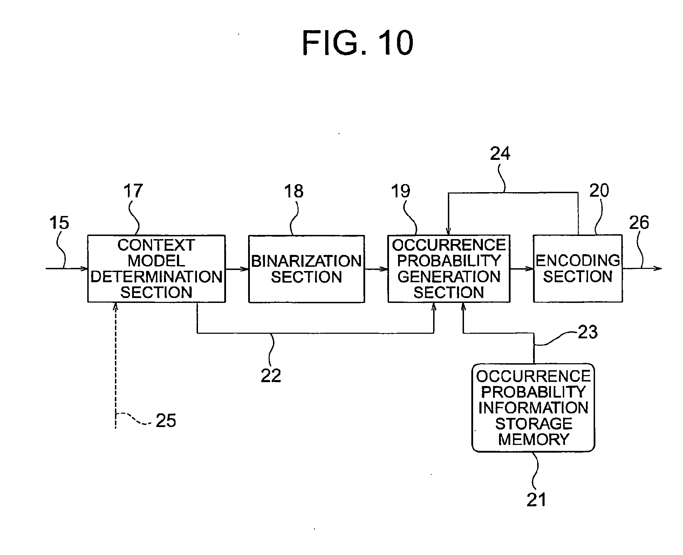

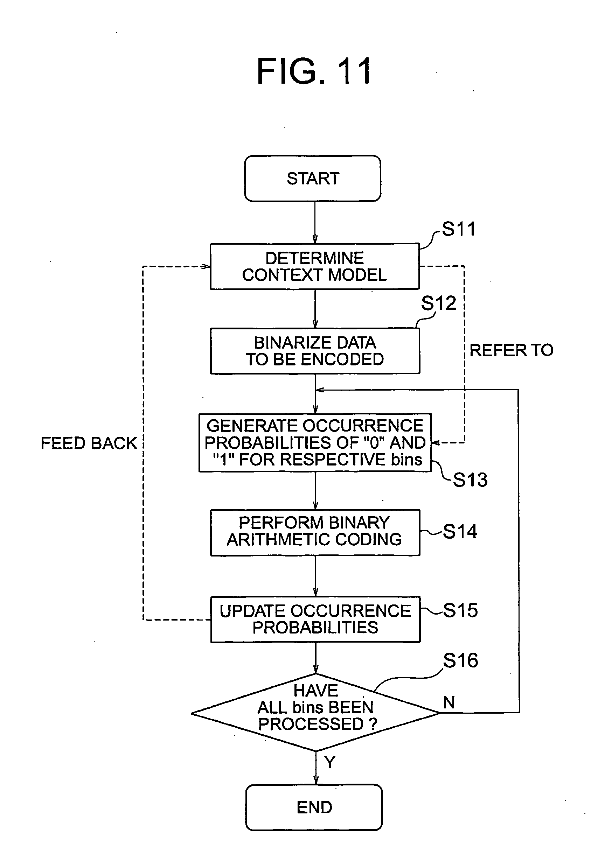

FIG. 10 illustrates an inner configuration of the variable-length encoding unit 8, whereas FIG. 11 illustrates an operation flow thereof. The variable-length encoding unit 8 according to the first embodiment of the present invention includes: a context model determination section 17 for determining a context model (described later) defined for each data type, such as the motion prediction mode or the motion vector, which is data to be encoded; a binarization section 18 for transforming multivalued data to binary data according to a binarization rule that is determined for each type of data to be encoded; an occurrence probability generation section 19 for providing an occurrence probability to each value of a bin (0 or 1) obtained after the binarization; an encoding section 20 for executing arithmetic coding based on the generated occurrence probability; and an occurrence probability information storage memory 21 for storing occurrence probability information. Description is herein given by limiting inputs to the context model determination section 17 to the motion prediction mode and the motion vector among the parameters for predicted signal generation 15.

(A) Context Model Determination Processing (Step S11 of FIG. 11)

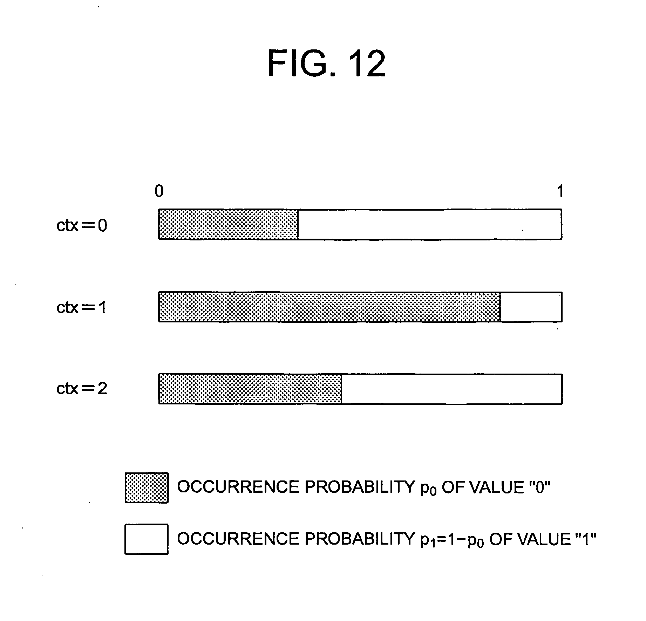

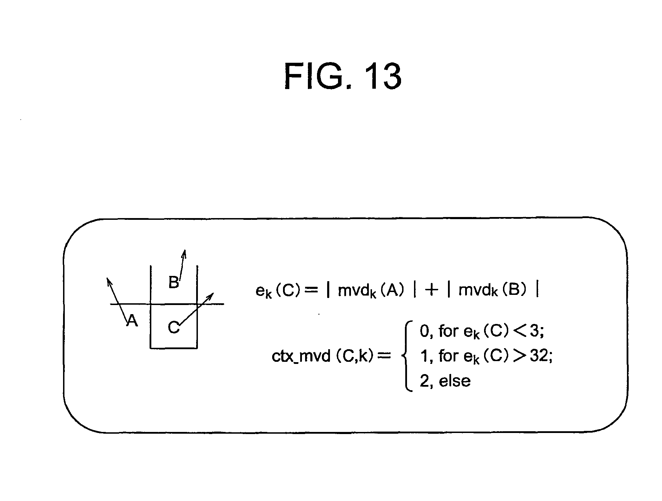

The context model is obtained by modeling dependency on other information that causes variation in occurrence probability of an information source symbol. By switching the state of the occurrence probability according to the dependency, it is possible to perform the encoding that is more adaptive to the actual occurrence probability of the symbol. FIG. 12 illustrates a concept of the context model (ctx). Note that, in the figure, the information source symbol is binary, but may be multivalued. Options 0 to 2 of FIG. 12 for the ctx are defined assuming that the state of the occurrence probability of the information source symbol using this ctx may change according to the condition. To take the encoding device according to the first embodiment of the present invention as an example, the value of the ctx is switched according to the dependency between data to be encoded in a given coding block and data to be encoded in its surrounding coding block. For example, FIG. 13 illustrates an example of the context model regarding the motion vector which is disclosed in Non Patent Literature 4. In FIG. 13, the motion vector of the block C is to be encoded (precisely, a prediction difference value $mvd_k$ (C), which is obtained by predicting the motion vector of the block C from its vicinities, is to be encoded), and ctx_mvd(C,k) represents the context model. The motion vector prediction difference value in the block A is represented by $mvd_k(A)$, and the motion vector prediction difference value in the block B is represented by $mvd_k(B)$, which are used to define a switching evaluation value $e_k(C)$ of the context model. The evaluation value $e_k(C)$ indicates the degree of variation in motion vectors in the vicinities. Generally, in a case where the variation is small, $mvd_k(C)$ is small. On the other hand, in a case where $e_k(C)$ is large, $mvd_k(C)$ tends to become large. Therefore, it is desired that a symbol occurrence probability of $mvd_k(C)$ be adapted based on $e_k(C)$. A set of variations of the occurrence probability is the context model. In this case, it can be said that there are three types of occurrence probability variations.

As described above, the context model is defined in advance for each piece of data to be encoded, and is shared between the encoding device and the decoding device. The context model determination section 17 performs processing of selecting a predefined model based on the type of the data to be encoded (the selection of the occurrence probability variation of the context model corresponds to occurrence probability generation processing described in (C) below).

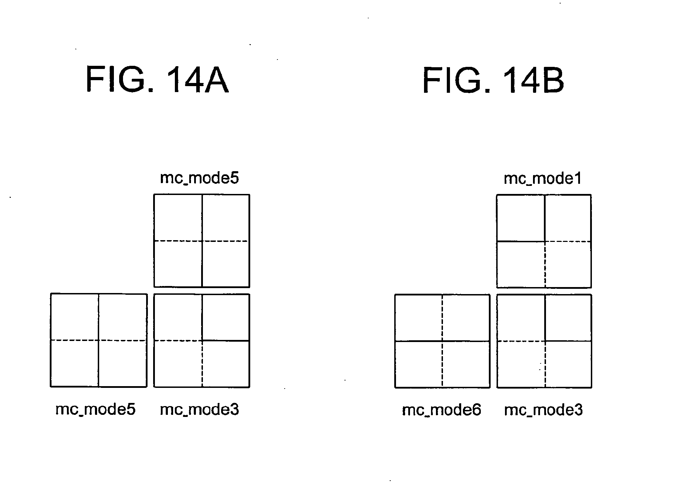

The variable-length encoding unit 8 according to the first embodiment of the present invention has a feature in that a plurality of candidates of a context model 22 that is to be assigned to the motion prediction mode and the motion vector are prepared, and that the context model 22 to be used is switched based on context model selection information 25. As illustrated in FIG. 9, if the correlations are low in motion state between frames, the motion prediction mode $m(B_x)$ of the basic block $B_x$ to be predicted/encoded has conceivably high correlations with the states of spatially-adjacent image regions in the same frame (specifically, the value of $m(B_x)$ is strongly affected by the division shape of $m(B_a)$ or $m(B_b)$), and hence the motion prediction mode $m(B_a)$ of the left basic block $B_a$ and the motion prediction mode $m(B_b)$ of the upper basic block $B_b$ in the same frame are used in determining the context model 22. FIGS. 14A and 14B illustrate an example that provides reasoning for this concept. FIGS. 14A and 14B illustrate a comparison between two states of the motion prediction modes selected in $B_a$ and $B_b$, provided that $m(B_x)$=mc_mode3. In part (A) of the figure, both $B_a$ and $B_b$ are naturally connected to the division shape of $m(B_x)$ in their division boundaries. On the other hand, in part (B), both $B_a$ and $B_b$ are not connected thereto in their division boundaries. Generally, the division shape implies the existence of a plurality of different motion regions in the coding block, and thus is likely to reflect the structure of the video. Accordingly, part (A) is conceivably a "state more likely to occur" compared to part (B). In other words, the occurrence probability of $m(B_x)$ is affected according to the states of $m(B_a)$ and $m(B_b)$.

Similarly, if the correlations are high in motion state between frames, it is conceivable that there are high correlations with the state of a temporally-adjacent image region (specifically, the probability for a possible value as $m(B_x)$ changes according to the division shape of $m(B_c)$), and hence the motion prediction mode $m(B_c)$ of the basic block $B_c$ in an adjacent preceding frame, which is located at the same position as the basic block $B_x$, is used in determining the context model 22.

Further, similarly, the motion prediction mode of the color component $C_0$ conceivably has given correlations in image structure with the motion prediction modes of the other color components $C_1$ and $C_2$ at the corresponding position. Therefore, in a case where the motion prediction mode is separately determined for each color component, the correlations among the color components may be used in determining the context model 22.

Similarly, in determining the context model 22 of the motion vector, if the correlations are low in motion state between frames, the motion vector of the left block $B_a$ and the motion vector of the upper block $B_b$ in the same frame are used in determining the context model 22. On the other hand, if the correlations are high in motion state between frames, the motion vector of the block $B_c$ in the adjacent preceding frame, which is located at the same position as the block $B_x$, is used in determining the context model 22. Similarly to the motion prediction mode, with regard to the motion vector, too, the correlations among the color components may be used in determining the context model 22.

The degree of correlations in motion state between frames may be detected through a predeterminedmethod in the encoding device, and the value of the context model selection information 25 may be explicitly multiplexed into the bit stream so as to be transmitted to the decoding device. Alternatively, the value of the context model selection information 25 may be determined based on such information that is detectable by both the encoding device and the decoding device. The video signal is unsteady, and hence, if such adaptive control is enabled, the efficiency of the arithmetic coding can be increased.

(B) Binarization Processing (Step S12 of FIG. 11)

The context model is determined according to each bin (binary position) in a binary sequence obtained by binarizing the data to be encoded in the binarization section 18. As a rule of the binarization, variable-length transform to a binary sequence is performed according to a rough distribution of a possible value for each piece of data to be encoded. The binarization has the following advantages. For example, by performing the encoding on a bin basis instead of subjecting, to the arithmetic coding, the original data to be encoded which may otherwise be multivalued, it is possible to reduce the number of divisions of a probability number line to simplify the computation, and to streamline the context model.

(C) Occurrence Probability Generation Processing (Step S13 of FIG. 11)

Through the processes (A) and (B) described above, multivalued data to be encoded has been binarized, and the context model to be applied to each bin has been set, meaning that the preparation for the encoding has been completed. Subsequently, the occurrence probability generation section 19 performs processing of generating the occurrence probability information to be used for the arithmetic coding. Each context model contains variations of the occurrence probability with respect to the respective values of "0" and "1", and hence the processing is performed by referring to the context model 22 determined in Step S11 as illustrated in FIG. 11. The evaluation value for selecting the occurrence probability as illustrated as $e_k(C)$ in FIG. 13 is determined, and, according to this value, it is determined which occurrence probability variation is to be used for current encoding from among the options of the referred-to context model. In addition, the variable-length encoding unit 8 according to the first embodiment of the present invention includes the occurrence probability information storage memory 21, and is accordingly provided with a mechanism for storing, for the number of variations of the context model to be used, pieces of occurrence probability information 23 which are sequentially updated in the course of the encoding. The occurrence probability generation section 19 determines the occurrence probability information 23 that is to be used for the current encoding according to the value of the context model 22.

(D) Encoding Processing (Step S14 of FIG. 11)

Through (C), the occurrence probabilities of the respective values of "0" and "1" on the probability number line which are necessary for the arithmetic coding process are obtained, and hence the arithmetic coding is performed in the encoding section 20 according to the processes described in the example of the related art. Further, an actual encoded value (0 or 1) 24 is fed back to the occurrence probability generation section 19, and occurrence frequencies of "0" and "1" are counted in order to update the used occurrence probability information 23 (Step S15). For example, it is assumed that, at a time when the encoding processing has been performed on 100 bins by using a given particular piece of the occurrence probability information 23, the occurrence probabilities of "0" and "1" in the occurrence probability variation are 0.25 and 0.75, respectively. Here, if "1" is encoded using the same occurrence probability variation, the appearance frequency of "1" is updated, and the occurrence probabilities of "0" and "1" are changed to 0.247 and 0.752, respectively. With this mechanism, it is possible to perform efficient encoding adaptive to the actual occurrence probabilities. An arithmetic coding result 26 is an output from the variable-length encoding unit 8, and is thus output from the encoding device as the bit stream 9.
In the description above, the context model selection information 25 is used for selecting whether to determine the context model 22 by using information in the same frame or by referring to information of the adj acent preceding frame. However, similarly, the context model selection information 25 may be used for selecting whether or not to determine the context model 22 to be used for the encoding of the motion prediction modes of the color components $C_1$ and $C_2$ in FIG. 7 or FIG. 8 by referring to the state of the motion prediction mode of the corresponding component $C_0$. With this configuration, in a case where the state of the motion prediction modes of the color components $C_1$ and $C_2$ has high correlations with the state of the motion prediction mode of the component $C_0$, it is possible to increase the encoding efficiency.

2. Structure of Encoded Bit Stream

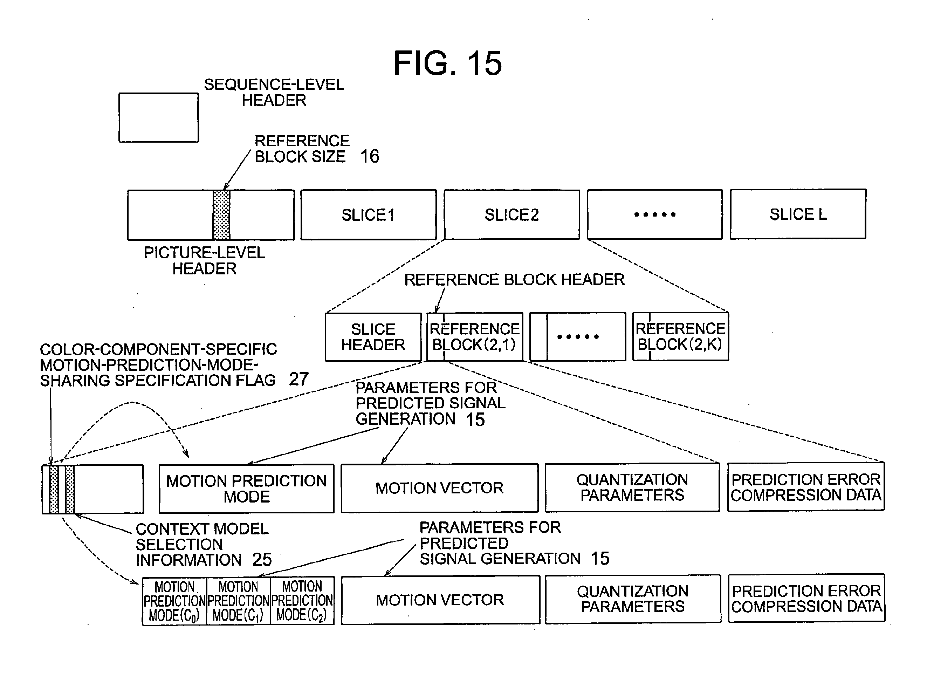

The input video signal 1 is encoded by the image encoding device of FIG. 1 based on the above-mentioned processing, and is then output from the image encoding device as the bit stream 9 in a unit obtained by bundling a plurality of coding blocks (hereinbelow, referred to as slice). FIG. 15 illustrates a data array of the bit stream 9. The bit stream 9 is structured as a collection of pieces of encoded data corresponding to the number of coding blocks contained in a frame, and the coding blocks are unitized in units of the slice. A picture-level header, which is referred to as common parameters by the coding blocks belonging to the same frame, is prepared, and the coding block size 16 is stored in the picture-level header. If the coding block size 16 is fixed in a sequence, the coding block size 16 may be multiplexed into a sequence-level header.
Each slice starts with a slice header, and pieces of encoded data of respective coding blocks in the slice are subsequently arrayed (in this example, indicating that K coding blocks are contained in a second slice). The slice header is followed by pieces of data of the coding blocks. The coding block data is structured by a coding block header and prediction error compression data. In the coding block header, the motion prediction modes and the motion vectors for the motion prediction unit blocks in the coding block, the quantization parameters used for the generation of the prediction error compression data, and the like are arrayed. In the motion prediction mode, first, a color-component-specific motion-prediction-mode-sharing specification flag 27 is multiplexed thereinto for indicating whether or not multiplexing is separately performed for each component of the three color components. If the flag indicates "shared among the three components", one shared motion prediction mode is multiplexed. If the flag indicates "separate among the three components", color-component-specific motion prediction modes determined through such a method as illustrated in FIG. 7 or 8 are separately multiplexed. Further, the coding block header contains the context model selection information 25 indicating a context model selecting policy used in the arithmetic coding of the motion prediction mode and the motion vector.

Note that, though not illustrated, the coding block size determination unit 160 may be configured to be able to select the sizes ($L_i$ and $M_i$) of the motion prediction unit blocks used in the respective coding blocks on a coding block basis, and the sizes ($L_i$ and $M_i$) of the motion prediction unit blocks used in the coding block may be multiplexed into each coding block header instead of being multiplexed to a sequence- or picture-level header. With this, it is necessary to encode the sizes ($L_i$ and $M_i$) of the motion prediction unit blocks on a coding block basis, but the size of the motion prediction unit block can be changed according to local properties of the image signal, which therefore enables more adaptive motion prediction to be performed. Regarding whether to perform multiplexing into each coding block header or to perform multiplexing fixedly into an upper level header, such as the sequence, the GOP, the picture, and the slice, in a case where there is little influence on the motion prediction capability even when the sizes of the motion prediction unit blocks are fixed at the upper level by multiplexing specification information thereof into the upper level header, such as the sequence, the GOP, the picture, and the slice, overhead of encoding the sizes ($L_i$ and $M_i$) of the motion prediction unit blocks on a coding block basis can be reduced, thereby enabling efficient encoding.

3. Operation of Image Decoding Device

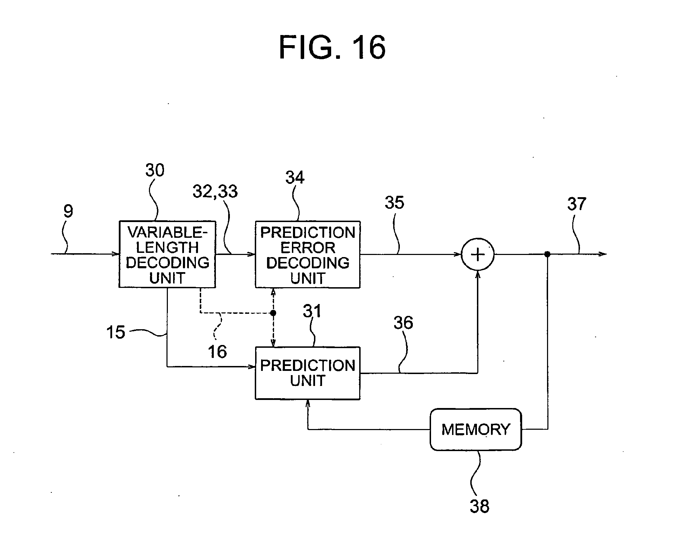

FIG. 16 illustrates a configuration of the image decoding device according to the first embodiment of the present invention. A variable-length decoding unit 30 receives an input of the bit stream 9 illustrated in FIG. 15, and, after decoding the sequence-level header, decodes the picture-level header, to thereby decode the coding block size 16. By doing so, the variable-length decoding unit 30 recognizes the size ($M_{max}$, $L_i$, and $M_i$) of the coding block used in the picture, to thereby notify the size to a prediction error decoding unit 34 and a prediction unit 31. Note that, in a case of a bit stream structure that allows the size ($L_i$ and $M_i$) of the motion prediction unit block to be multiplexed into each coding block header, specification information indicating whether or not $L_i$ and $M_i$ are multiplexed into each coding block header is decoded, and, based on the specification information, in the case where $L_i$ and $M_i$ are multiplexed into each coding block header, $L_i$ and $M_i$ are recognized by decoding each coding block header.

In the decoding of the coding block data, first, the coding block header is decoded, and then, the color-component-specific motion-prediction-mode-sharing specification flag 27 is decoded. Further, the context model selection information 25 is decoded, and, based on the color-component-specific motion-prediction-mode-sharing specification flag 27 and the context model selection information 25, the motion prediction mode applied on a motion prediction unit block basis for each of the color components is decoded. Further, based on the context model selection information 25, the motion vector is decoded, and then, such pieces of information as the quantization parameters and the prediction error compression data are sequentially decoded. The decoding of the motion prediction mode and the motion vector is described later.

Prediction error compression data 32 and quantization step size parameters 33 are input to the prediction error decoding unit 34, to thereby be restored as a decoded prediction error signal 35. The prediction unit 31 generates a predicted signal 36 based on the parameters for predicted signal generation 15 decoded by the variable-length decoding unit 30 and the reference image in a memory 38 (the prediction unit 31 does not include the motion vector detection operation of the prediction unit 4 of the encoding device). The motion prediction mode is any one of the modes of FIG. 3. Based on the division shape thereof, a predicted image is generated using the motion vectors assigned to the respective basic blocks. The decoded prediction error signal 35 and the predicted signal 36 are added by an adder, to thereby obtain a decoded signal 37. The decoded signal 37 is used for the subsequent motion compensation prediction of the coding block, and thus stored in the memory 38.

Hereinbelow, description is given of processing of decoding the motion prediction mode and the motion vector of the coding block.

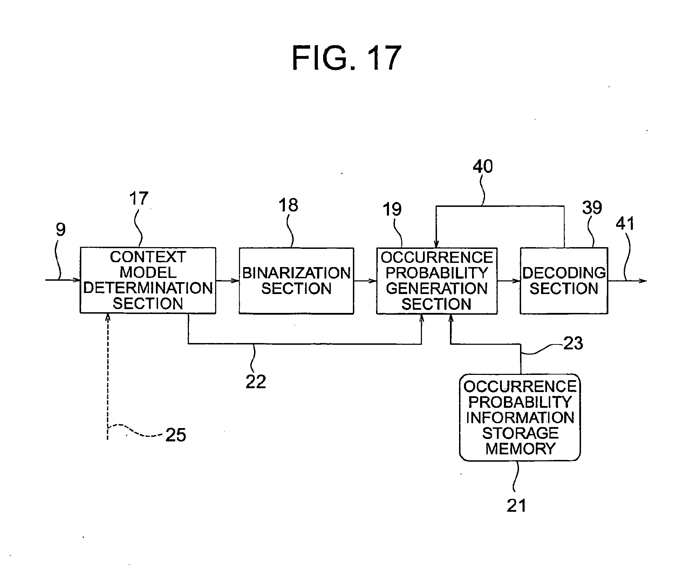

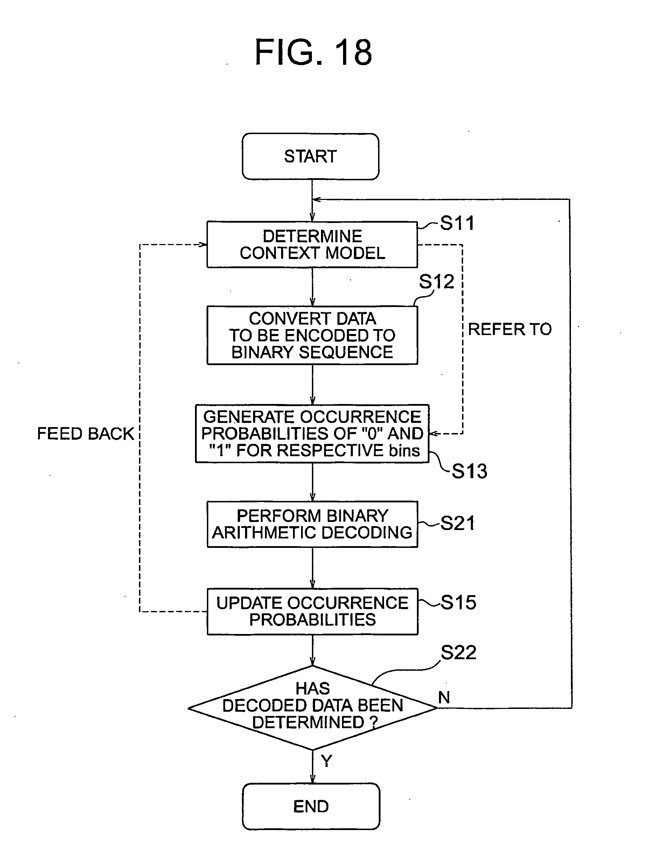

FIG. 17 illustrates an inner configuration of the variable-length decoding unit 30 which is related to arithmetic decoding processing, whereas FIG. 18 illustrates an operation flow thereof.

The variable-length decoding unit 30 according to the first embodiment of the present invention includes the context model determination section 17 for identifying the type of each piece of data to be decoded, such as the parameters for predicted signal generation 15 including the motion prediction mode, the motion vector, and the like, the prediction error compression data 32, and the quantization step size parameters 33, and determining the context models each defined in a sharing manner with the encoding device; the binarization section 18 for generating the binarization rule determined based on the type of the data to be decoded; the occurrence probability generation section 19 for providing the occurrence probabilities of individual bins (0 or 1) according to the binarization rule and the context model; a decoding section 39 for executing arithmetic decoding based on the generated occurrence probabilities, and decoding encoded data based on the binary sequence thus obtained as a result thereof and the above-mentioned binarization rule; and the occurrence probability information storage memory 21 for storing the occurrence probability information. The blocks assigned with the same reference numbers as the inner configuration components of the variable-length encoding unit 8 of FIG. 10 perform the same operations as those inner configuration components.

(E) Context Model Determination Processing, Binarization Processing, and Occurrence Probability Generation Processing (Steps S11 to S13 of FIG. 18)

Those processes are in accordance with the processes (A) to (C) performed on the encoding device side. In order to determine the context model used for the decoding of the motion prediction mode and the motion vector, the context model selection information 25 decoded as described above is referred to.

(F) Arithmetic Decoding Processing

The occurrence probabilities of bins to be decoded are determined through the processes up until (E), and hence the values of the bins are restored in the decoding section 39 according to predetermined processes of the arithmetic decoding processing (Step S21 of FIG. 18). Restored values 40 of the bins are fed back to the occurrence probability generation section 19, and the occurrence frequencies of "0" and "1" are counted in order to update the used occurrence probability information 23 (Step S15). Every time the restored value of each bin is determined, the decoding section 39 checks matching with a binary sequence pattern determined according to the binarization rule, and then, a data value indicated by a matching pattern is output as a decoded data value 41 (Step S22). Unless the decoded data is determined, the processing returns to Step S11 to continue the decoding processing.

Note that, in the description above, the context model selection information 25 is multiplexed in units of the coding block, but may be multiplexed in units of the slice, in units of the picture, or the like. By allowing the context model selection information 25 to be multiplexed as a flag positioned at the upper data layer, such as the slice, the picture, or the sequence, in a case where a sufficient encoding efficiency is secured with switching at the upper layer of the slice or higher, it is possible to reduce overhead bits owing to the fact that the context model selection information 25 does not need to be multiplexed one piece by one piece at the coding block level.

Further, the context model selection information 25 may be such information that is determined inside the decoding device based on related information contained in another bit stream than the bit stream of its own. Further, in the description above, the variable-length encoding unit 8 and the variable-length decoding unit 30 have been described as performing the arithmetic coding processing and the arithmetic decoding processing, respectively. However, those processings may be replaced with Huffman encoding processing, and the context model selection information 25 may be used as means for adaptively switching a variable-length encoding table.

According to the encoding/decoding device which is configured as described above and thus provided with the arithmetic coding processing and the arithmetic decoding processing, by using the context model selection information 25, the arithmetic coding can be adaptively performed on information relating to the motion prediction mode and the motion vector according to a state of vicinities of the coding block to be encoded, which therefore enables more efficient encoding.

According to the image encoding device and the image decoding device of the first embodiment of the present invention described above, a color video signal in the 4:4:4 format is efficiently encoded, and hence, according to the properties of a signal of each color component, the motion prediction mode and the motion vector can be dynamically switched with a smaller amount of information. Therefore, in low bit-rate encoding having a high compression rate, it is possible to provide the image encoding device which performs the encoding while effectively suppressing the amount of encoding for the motion vector, and the image decoding device therefor.

Note that, in the first embodiment of the present invention, description has been given of an embodiment in which a 4:4:4 video signal is encoded and decoded, but it goes without saying that the adaptive encoding of the motion vector according to the present invention may be applied to video encoding intended for the color-reduced 4 : 2 : 0 or 4 : 2 : 2 format, which is the conventional luminance/color difference component format, to thereby increase the efficiency of the encoding of the motion prediction mode and the motion vector.

Further, description has been given by combining an operation in which, after determining an optimum motion prediction mode, an optimum motion vector, and an optimum prediction error signal for a given particular component, the processing of determining the motion prediction modes, the motion vectors, and the prediction error signals for the rest of the color components based on those pieces of information is switched in units of the coding block (FIG. 7 and FIG. 8) and an operation in which the context model is selected based on the temporal correlations as well as the spatial correlations (FIG. 9). However, even in a case where the operations are performed independently of each other, the above-mentioned effects can be obtained.

Reference Signs List

1 input video signal, 2 block division unit, 3 signal to be encoded, 4 prediction unit, 5 prediction error signal, 6 compression unit, 7 compressed data, 8 variable-length encoding unit, 9 bit stream, 10 local decoding unit, 11 decoded prediction error signal, 12 predicted signal, 13 decoded signal, 14 memory, 15 parameter for predicted signal generation, 16 coding block size, 17 context model determination section, 18 binarization section, 19 occurrence probability generation section, 20 encoding section, 21 occurrence probability information storage memory, 22 context model, 23 occurrence probability information, 24 encoded value, 25 context model selection information, 26 arithmetic coding result, 27 color-component-specific motion-prediction-mode-sharing specification flag, 30 variable-length decoding unit, 31 prediction unit, 32 prediction error compression data, 33 quantization step size parameter, 34 prediction error decoding, 35 decoded prediction error signal, 36 predicted signal, 37 decoded signal, 38 memory, 40 restored value of bin, 41 decoded data value, 160 coding block size determination unit

**Claims**

1. An image encoding device for dividing each frame of a digital video signal into predetermined coding blocks, and performing, in units thereof, compression encoding by using motion compensation prediction,
the image encoding device comprising:

coding block size determination means for determining a size of the coding block based on a predetermined method, and separately determining, with respect to a signal of each color component in the coding block, a shape of a motion prediction unit block serving as a unit for performing motion prediction;
prediction means for:

determining, for the motion prediction unit block of a first color component in the coding block, a first motion prediction mode exhibiting a highest efficiency among a plurality of motion prediction modes, and detecting a first motion vector corresponding to the determined first motion prediction mode;
determining, for the motion prediction unit block of a second color component in the coding block, a second motion prediction mode based on the first motion prediction mode, the shape of the motion prediction unit block of the first color component, the shape of the motion prediction unit block of the second color component, and the first motion vector, and detecting a second motion vector corresponding to the determined second motion prediction mode; and
determining, for the motion prediction unit block of a third color component in the coding block, a third motion prediction mode based on the first motion prediction mode, the shape of the motion prediction unit block of the first color component, the shape of the motion prediction unit block of the third color component, and the first motion vector, and detecting a third motion vector corresponding to the determined third motion prediction mode, to thereby perform output; and

variable-length encoding means for:

determining, when performing arithmetic coding on the first motion prediction mode, an occurrence probability of a value of the first motion prediction mode based on a motion prediction mode selected in a spatially-adjacent motion prediction unit block and a motion prediction mode selected in a temporally-adjacent motion prediction unit block, to thereby perform the arithmetic coding; and
determining, when performing the arithmetic coding on the second motion prediction mode and the third motion prediction mode, the occurrence probability of a value of the second motion prediction mode and the occurrence probability of a value of the third motion prediction mode based on the motion prediction mode selected in the spatially-adjacent motion prediction unit block, the motion prediction mode selected in the temporally-adjacent motion prediction unit block, and the first motion prediction mode, to thereby perform the arithmetic coding.

2. An image decoding device for receiving an image-encoded bit stream obtained through dividing each frame of a digital video signal into predetermined coding blocks and performing, in units thereof, compression encoding by using motion compensation prediction, to thereby restore the digital video signal,
the image decoding device comprising:

header decoding means for decoding, from the received bit stream, a size of the coding block and a shape of a motion prediction unit block serving as a unit for performing motion prediction for each color component constituting the digital video signal;
coding block decoding means for:

decoding, in units of the coding block, a motion predictionmode and a motion vector which are used for predicted-image generation of the motion prediction unit block of the each color component;
decoding prediction error compression data in the coding block and specification information indicating whether or not the motion prediction mode for the motion prediction unit block of the each color component is to be shared among all color components;
decoding, based on the specification information, the motion prediction mode of each color component; and
determining, based on the decodedmotion predictionmode and the decoded motion vector of a first color component, the motion vector corresponding to the motion prediction mode of a second color component and the motion vector corresponding to the motion prediction mode of a third color component;

predictionmeans for generating, basedonthemotionprediction mode and the motion vector, a predicted image of the motion prediction unit block of the each color component;
prediction error decoding means for decoding the prediction error compression data in the coding block into a prediction error image signal;
decoding adding means for generating a decoded image by adding the predicted image and the prediction error image signal;
a memory for storing the decoded image as reference image data for the motion compensation prediction; and
variable-length decoding means for:

determining, when performing arithmetic decoding on the motion prediction mode of the first color component, an occurrence probability of a value of the motion prediction mode of the first color component based on a motion prediction mode decoded in a spatially-adjacent motion prediction unit block and a motion prediction mode decoded in a temporally-adjacent motion prediction unit block, to thereby perform the arithmetic decoding; and
determining, when performing the arithmetic decoding on the motion prediction mode of the second color component and the motion prediction mode of the third color component, the occurrence probability of a value of the motion prediction mode of the second color component and the occurrence probability of a value of the motion prediction mode of the third color component based on the motion prediction mode decoded in the spatially-adjacent motion prediction unit block, the motion prediction mode decoded in the temporally-adjacent motion prediction unit block, and the motion prediction mode of the first color component, to thereby perform the arithmetic decoding.

3. An image encoding method of dividing each frame of a digital video signal into predetermined coding blocks, and performing, in units thereof, compression encoding by using motion compensation prediction,
the image encoding method comprising:

a coding block size determination step of determining a size of the coding block based on a predetermined method, and separately determining, with respect to a signal of each color component in the coding block, a shape of a motion prediction unit block serving as a unit for performing motion prediction;
a prediction step of:

determining, for the motion prediction unit block of a first color component in the coding block, a first motion prediction mode exhibiting a highest efficiency among a plurality of motion prediction modes, and detecting a first motion vector corresponding to the determined first motion prediction mode;
determining, for the motion prediction unit block of a second color component in the coding block, a second motion prediction mode based on the first motion prediction mode, the shape of the motion prediction unit block of the first color component, the shape of the motion prediction unit block of the second color component, and the first motion vector, and detecting a second motion vector corresponding to the determined second motion prediction mode; and

determining, for the motion prediction unit block of a third color component in the coding block, a third motion prediction mode based on the first motion prediction mode, the shape of the motion prediction unit block of the first color component, the shape of the motion prediction unit block of the third color component, and the first motion vector, and detecting a third motion vector corresponding to the determined third motion prediction mode, to thereby perform output; and

a variable-length encoding step of:

determining, when performing arithmetic coding on the first motion prediction mode, an occurrence probability of a value of the first motion prediction mode based on a motion prediction mode selected in a spatially-adjacent motion prediction unit block and a motion prediction mode selected in a temporally-adjacent motion prediction unit block, to thereby perform the arithmetic coding; and

determining, when performing the arithmetic coding on the second motion prediction mode and the third motion prediction mode, the occurrence probability of a value of the second motion prediction mode and the occurrence probability of a value of the third motion prediction mode based on the motion prediction mode selected in the spatially-adjacent motion prediction unit block, the motion prediction mode selected in the temporally-adjacent motion prediction unit block, and the first motion prediction mode, to thereby perform the arithmetic coding.

4. An image decoding method of receiving an image-encoded bit stream obtained through dividing each frame of a digital video signal into predetermined coding blocks and performing, in units thereof, compression encoding by using motion compensation prediction, to thereby restore the digital video signal, the image decoding method comprising:

a header decoding step of decoding, from the received bit stream, a size of the coding block and a shape of a motion prediction unit block serving as a unit for performing motion prediction for each color component constituting the digital video signal;

a coding block decoding step of:

decoding, in units of the coding block, a motion prediction mode and a motion vector which are used for predicted-image generation of the motion prediction unit block of the each color component;

decoding prediction error compression data in the coding block and specification information indicating whether or not the motion prediction mode for the motion prediction unit block of the each color component is to be shared among all color components;

decoding, based on the specification information, the motion prediction mode of each color component; and determining, based on the decoded motion prediction mode and the decoded motion vector of a first color component, the motion vector corresponding to the motion prediction mode of a second color component and the motion vector corresponding to the motion prediction mode of a third color component;

a prediction step of generating, based on the motion prediction mode and the motion vector, a predicted image of the motion prediction unit block of the each color component;

a prediction error decoding step of decoding the prediction error compression data in the coding block into a prediction error image signal;

a decoding adding step of generating a decoded image by adding the predicted image and the prediction error image signal;

a storage step of storing the decoded image as reference image data for the motion compensation prediction; and

a variable-length decoding step of:

determining, when performing arithmetic decoding on the motion prediction mode of the first color component, an occurrence probability of a value of the motion prediction mode of the first color component based on a motion prediction mode decoded in a spatially-adjacent motion prediction unit block and a motion prediction mode decoded in a temporally-adjacent motion prediction unit block, to thereby perform the arithmetic decoding; and

determining, when performing the arithmetic decoding on the motion prediction mode of the second color component and the motion prediction mode of the third color component, the occurrence probability of a value of the motion prediction mode of the second color component and the occurrence probability of a value of the motion prediction mode of the third color component based on the motion prediction mode decoded in the spatially-adjacent motion prediction unit block, the motion prediction mode decoded in the temporally-adjacent motion prediction unit block, and the motion prediction mode of the first color component, to thereby perform the arithmetic decoding.

5. An image encoding device for dividing each frame of a digital video signal into predetermined coding blocks, and performing, in units thereof, compression encoding by using motion compensation prediction, the image encoding device comprising:

coding block size determination means for determining a size of the coding block based on a predetermined method, and separately determining, with respect to a signal of each color component in the coding block, a shape of a motion prediction unit block serving as a unit for performing motion prediction; and prediction means for:

determining, for the motion prediction unit block of a first color component in the coding block, a first motion prediction mode exhibiting a highest efficiency among a plurality of motion prediction modes, and detecting a first motion vector corresponding to the determined first motion prediction mode;
determining, for the motion prediction unit block of a second color component in the coding block, a second motion prediction mode based on the first motion prediction mode, the shape of the motion prediction unit block of the first color component, the shape of the motion prediction unit block of the second color component, and the first motion vector, and detecting a second motion vector corresponding to the determined second motion prediction mode; and
determining, for the motion prediction unit block of a third color component in the coding block, a third motion prediction mode based on the first motion prediction mode, the shape of the motion prediction unit block of the first color component, the shape of the motion prediction unit block of the third color component, and the first motion vector, and detecting a third motion vector corresponding to the determined third motion prediction mode, to thereby perform output.

6. An image encoding device for dividing each frame of a digital video signal into predetermined unit regions, and performing, in units thereof, compression encoding by using motion compensation prediction, the image encoding device comprising:

prediction means for determining, for each color component, a motion prediction mode exhibiting a highest efficiency among a plurality of motion prediction modes, and detecting a motion vector corresponding to the determined motion prediction mode, to thereby perform output; and
variable-length encoding means for determining, when performing arithmetic coding on the motion prediction mode of the each color component, an occurrence probability of a value of the motion prediction mode of the each color component based on a motion prediction mode selected in a spatially-adjacent unit region and a motion prediction mode selected in a temporally-adjacent unit region, to thereby perform the arithmetic coding.

7. An image decoding device for receiving an image-encoded bit stream obtained through dividing each frame of a digital video signal into predetermined coding blocks and performing, in units thereof, compression encoding by using motion compensation prediction, to thereby restore the digital video signal, the image decoding device comprising:

header decoding means for decoding, from the received bit stream, a size of the coding block and a shape of a motion prediction unit block serving as a unit for performing motion prediction for each color component constituting the digital video signal;
coding block decoding means for:

decoding, in units of the coding block, a motion prediction mode and a motion vector which are used for predicted-image generation of the motion prediction unit block of the each color component;
decoding prediction error compression data in the coding block and specification information indicating whether or not the motion prediction mode for the motion prediction unit block of the each color component is to be shared among all color components;
decoding, based on the specification information, the motion prediction mode of each color component; and
determining, based on the decoded motion prediction mode and the decoded motion vector of a first color component, the motion vector corresponding to the motion prediction mode of a second color component and the motion vector corresponding to the motion prediction mode of a third color component;

predictionmeans for generating, based on the motion prediction mode and the motion vector, a predicted image of the motion prediction unit block of the each color component;
prediction error decoding means for decoding the prediction error compression data in the coding block into a prediction error image signal;
decoding adding means for generating a decoded image by adding the predicted image and the prediction error image signal; and
a memory for storing the decoded image as reference image data for the motion compensation prediction.

8. An image decoding device for receiving an image-encoded bit stream obtained through dividing each frame of a digital video signal into predetermined unit regions and performing, in units thereof, compression encoding by using motion compensation prediction, to thereby restore the digital video signal,
the image decoding device comprising:

decoding means for:

decoding a motion prediction mode and a motion vector which are used for predicted-image generation of each color component, prediction error compression data, and specification information indicating whether or not the motion prediction mode of the each color component is to be shared among all color components; and
decoding, based on the specification information, the motion prediction mode of each color component;

predictionmeans for generating, based on the motion prediction mode and the motion vector, a predicted image of the each color component;
prediction error decoding means for decoding the prediction error compression data into a prediction error image signal;
decoding adding means for generating a decoded image by adding the predicted image and the prediction error image signal;
a memory for storing the decoded image as reference image data for the motion compensation prediction; and
variable-length decoding means for determining, when performing arithmetic decoding on the motion prediction mode of the each color component, an occurrence probability of a value of the motion prediction mode of the each color component based on a motion prediction mode decoded in a spatially-adjacent unit region and a motion prediction mode decoded in a temporally-adjacent unit region, to thereby perform the arithmetic decoding.

# FIG. 1

160

REFERENCE
BLOCK SIZE
DETERMINATION
UNIT

16

15

2

1

3

BLOCK
DIVISION
UNIT

4

PREDICTION
UNIT

5

6

COMPRESSION
UNIT

7

8

VARIABLE-
LENGTH
ENCODING
UNIT

9

14

MEMORY

LOCAL
DECODING
UNIT

10

11

12

$+$

13

FIG. 2A

FIG. 2B

FIG. 3

mc_mode0  mc_mode1  mc_mode2  mc_mode3  mc_mode4

mc_mode5  mc_mode6  mc_mode7

EP 2 312 856 A1

# FIG. 4

START

CALCULATE COST $J_1$ — S1

S2
IS $J_1$ SMALLEST ? — N → k++ — S5

Y

RETAIN MOTION VECTOR AND PREDICTION ERROR SIGNAL OF mc_mode1 — S3

S4
HAVE ALL MOTION PREDICTION MODES BEEN EXAMINED ? — N

Y

OUTPUT RETAINED MOTION PREDICTION MODE, MOTION VECTOR, AND PREDICTION ERROR SIGNAL — S6

END

# FIG. 5

EP 2 312 856 A1

FIG. 6

mc_mode1    mc_mode2    mc_mode3    mc_mode4

# FIG. 7

COLOR COMPONENT $C_0$
FOR WHICH MOTION
DETECTION HAS
BEEN PERFORMED

MV (b,1)

$B_b$

MV (b,0)

MV (a,0)

MV (x,0)

MV (a,1)

$B_a$

$B_x$

COLOR COMPONENTS $C_1$
AND $C_2$ OTHER THAN
COLOR COMPONENT $C_0$

MV (y,0)

MV (y,1)

$B_y$

EP 2 312 856 A1

# FIG. 8

COLOR COMPONENT $C_0$
FOR WHICH MOTION
DETECTION HAS
BEEN PERFORMED

MV (a,0)

MV (b,1)

MV (b,0)

$B_a$

MV (c,0)

$B_b$

MV (d,0)

$B_c$

MV (c,1)

$B_d$

COLOR COMPONENTS $C_1$
AND $C_2$ OTHER THAN
COLOR COMPONENT $C_0$

MV (y,0)

MV (y,1)

$B_y$

EP 2 312 856 A1

# FIG. 9

TIME

F' (t−1)

F (t)

B$_c$

B$_b$

B$_a$

B$_x$

EP 2 312 856 A1

# FIG. 10

CONTEXT MODEL DETERMINATION SECTION 17

BINARIZATION SECTION 18

OCCURRENCE PROBABILITY GENERATION SECTION 19

ENCODING SECTION 20

OCCURRENCE PROBABILITY INFORMATION STORAGE MEMORY 23

15 24 26 22 25 21

# FIG. 11

START

DETERMINE
CONTEXT MODEL ⟩S11

BINARIZE DATA
TO BE ENCODED ⟩S12

REFER TO

GENERATE OCCURRENCE
PROBABILITIES OF "0" AND
"1" FOR RESPECTIVE bins
S13

FEED BACK

PERFORM BINARY
ARITHMETIC CODING ⟩S14

UPDATE OCCURRENCE
PROBABILITIES ⟩S15

S16

HAVE
ALL bins BEEN
PROCESSED ?
N

Y

END

# FIG. 12

0                                                                                    1

ctx＝0

ctx＝1

ctx＝2

OCCURRENCE PROBABILITY $p_0$ OF VALUE "0"

OCCURRENCE PROBABILITY $p_1 = 1 - p_0$ OF VALUE "1"

# FIG. 13

$$e_k(C) = |\, mvd_k(A)\,| + |\, mvd_k(B)\,|$$

$$ctx\_mvd\,(C,k) = \begin{cases} 0, & \text{for } e_k(C) < 3; \\ 1, & \text{for } e_k(C) > 32; \\ 2, & \text{else} \end{cases}$$

# FIG. 14A

# FIG. 14B

mc_mode5

mc_mode5    mc_mode3

mc_mode1

mc_mode6    mc_mode3

# FIG. 15

SEQUENCE-LEVEL HEADER

REFERENCE BLOCK SIZE 16

PICTURE-LEVEL HEADER

| | SLICE1 | SLICE2 | ●●●●● | SLICE L |

REFERENCE BLOCK HEADER

| SLICE HEADER | REFERENCE BLOCK(2,1) | ●●●●● | REFERENCE BLOCK(2,K) |

COLOR-COMPONENT-SPECIFIC MOTION-PREDICTION-MODE-SHARING SPECIFICATION FLAG 27

PARAMETERS FOR PREDICTED SIGNAL GENERATION 15

| | MOTION PREDICTION MODE | MOTION VECTOR | QUANTIZATION PARAMETERS | PREDICTION ERROR COMPRESSION DATA |

CONTEXT MODEL SELECTION INFORMATION 25

PARAMETERS FOR PREDICTED SIGNAL GENERATION 15

| MOTION PREDICTION MODE($C_0$) | MOTION PREDICTION MODE($C_1$) | MOTION PREDICTION MODE($C_2$) | MOTION VECTOR | QUANTIZATION PARAMETERS | PREDICTION ERROR COMPRESSION DATA |

EP 2 312 856 A1

# FIG. 16

# FIG. 17

# FIG. 18

START

DETERMINE CONTEXT MODEL ~S11

CONVERT DATA TO BE ENCODED TO BINARY SEQUENCE ~S12

GENERATE OCCURRENCE PROBABILITIES OF "0" AND "1" FOR RESPECTIVE bins ~S13

REFER TO

PERFORM BINARY ARITHMETIC DECODING ~S21

FEED BACK

UPDATE OCCURRENCE PROBABILITIES ~S15

HAS DECODED DATA BEEN DETERMINED ? ~S22

N

Y

END

# FIG. 19

4:2:0 FORMAT

H/2  Cb

H  Y  H/2  Cr

W  W/2

4:4:4 FORMAT

H  C0  H  C1  H  C2

W  W  W

(C0,C1,C2) = (R,G,B) , (Y,Cb,Cr) , (X,Y,Z) etc

EP 2 312 856 A1

# FIG. 20

**INTERNATIONAL SEARCH REPORT**

| International application No. |
|---|
| PCT/JP2009/062212 |

A.  CLASSIFICATION OF SUBJECT MATTER
*H04N7/32(2006.01)i*

According to International Patent Classification (IPC) or to both national classification and IPC

B.  FIELDS SEARCHED

Minimum documentation searched (classification system followed by classification symbols)
H04N7/32

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y<br>A | WO 2007/010901 A1 (Panasonic Corp.),<br>25 January, 2007 (25.01.07),<br>Par. Nos. [0060] to [0089], [0121] to [0148];<br>Figs. 6, 16<br>& EP 1746839 A1        & EP 1753242 A2<br>& EP 1906676 A1 | 6,8<br>5,7<br>1-4 |
| Y<br>A | Sakae OKUBO et al., "Revised Edition H.264/AVC<br>Kyokasho", 1st edition, 2nd print, Impress R&D,<br>31 December, 2006 (31.12.06), pages 113 to 115 | 5,7<br>1-4,6,8 |
| A | WO 2007/055552 A1 (SAMSUNG ELECTRONICS CO.,<br>LTD.),<br>18 May, 2007 (18.05.07),<br>Full text; all drawings<br>& JP 2009-516417 A       & US 2007/0110153 A1<br>& KR 10-2007-0051681 A | 1-8 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>12 August, 2009 (12.08.09) | Date of mailing of the international search report<br>25 August, 2009 (25.08.09) |
|---|---|
| Name and mailing address of the ISA/<br>Japanese Patent Office | Authorized officer |
| Facsimile No. | Telephone No. |

Form PCT/ISA/210 (second sheet) (April 2007)

## INTERNATIONAL SEARCH REPORT

International application No.

PCT/JP2009/062212

C (Continuation).    DOCUMENTS CONSIDERED TO BE RELEVANT

| Category* | Citation of document, with indication, where appropriate, of the relevant passages | Relevant to claim No. |
|---|---|---|
| A | US 2008/0008238 A1  (SAMSUNG ELECTRONICS CO., LTD.), 10 January, 2008 (10.01.08), Full text; all drawings & WO 2008/008238 A2 | 1-8 |
| A | JP 2005-198292 A  (Samsung Electronics Co., Ltd.), 21 July, 2005 (21.07.05), Full text; all drawings & US 2005/0141617 A1     & US 2005/0111741 A1 & EP 1551184 A2         & EP 1538844 A2 & KR 10-2005-0067007 A   & KR 10-2005-0050540 A | 1-8 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2005009050 A1

### Non-patent literature cited in the description

- **S.Sekiguchi.** Low-overhead INTER Prediction Modes. *VCEG-N45,* September 2001

- **S. Kondo ; H.Sasai.** A Motion Compensation Technique using Sliced Blocks and its Application to Hybrid Video Coding. *VCIP 2005,* July 2005